# EUROPÄISCHE PATENTSCHRIFT

(11) **EP 2 753 766 B1**
(45) Veröffentlichungstag und Bekanntmachung des Hinweises auf die Patenterteilung: **03.02.2016**
(21) Anmeldenummer: 12756119.9
(22) Anmeldetag: 06.09.2012
(51) Int. Cl.: E03C 1/084, B05B 1/30, G05D 7/00

(54) **DURCHFLUSSREGLER**
THROUGHFLOW CONTROLLER
RÉGULATEUR DE DÉBIT

(30) Priorität: 06.09.2011 DE 202011105376 U
(43) Veröffentlichungstag der Anmeldung: 16.07.2014
(60) Teilanmeldung: 14001151.1
(73) Patentinhaber: Neoperl GmbH, 79379 Müllheim (DE)
(72) Erfinder: LACHER, Wolf-Dieter, 79379 Müllheim (DE); STEIN, Alexander, 79241 Ihringen (DE)
(74) Vertreter: Börjes-Pestalozza, Henrich
(86) Internationale Anmeldenummer: PCT/EP2012/003749
(87) Internationale Veröffentlichungsnummer: WO 2013/034298

(56) Entgegenhaltungen:
- WO-A1-2011/006082
- DE-A1-102010 006 376
- DE-U1-202010 007 835

## Beschreibung

Die Erfindung betrifft ein sanitäres Einbauteil mit einem Einsetzgehäuse, das in seinem Gehäuseinnenraum ein durchflussregelndes Funktionselement mit zumindest einem Durchflussloch hat, wobei zumindest ein Durchflussloch von einer Umfangswandung umgrenzt ist, die unter dem Druck des zuströmenden Wassers derart gegen eine Rückstellkraft formveränderbar ist, dass das zumindest eine Durchflussloch einen variablen Lochquerschnitt hat, der in Abhängigkeit vom Druck des zuströmenden Wassers zwischen einer Offenstellung und einer Minimalstellung mit demgegenüber reduziertem Lochquerschnitt veränderbar ist.

Sanitäre Einbauteile sind bereits in verschiedenen Ausführungen, beispielsweise als Strahlregler, vorbekannt. Die vorbekannten Strahlregler weisen regelmäßig ein Einsetzgehäuse auf, das unmittelbar oder unter Zuhilfenahme eines Auslaufmundstücks am Wasserauslauf einer sanitären Auslaufarmatur montierbar ist. Im Gehäuseinnenraum des Einsetzgehäuses ist ein Strahlzerleger vorgesehen, der Durchflusslöcher hat, welche das zuströmende Wasser in eine Vielzahl von Einzelstrahlen aufteilen. Die in denpurchflusslöchern erzeugten Einzelstrahlen erfahren eine derartige Beschleunigung, dass auf der Abströmseite des Strahlzerlegers ein Unterdruck entsteht. Mit Hilfe dieses auf der Abströmseite des Strahlzerlegers erzeugten Unterdrucks wird Umgebungsluft in den Gehäuseinnenraum des Einsetzgehäuses angesaugt, die dort mit den Einzelstrahlen durchmischt werden kann, bevor das derart mit Luft durchmischte Wasser als homogener, nicht-spritzender und perlend-weicher Gesamtstrahl aus dem Strahlreglergehäuse ausströmt.

Damit das Wasser unabhängig vom Wasserdruck ein bestimmtes festgelegtes Wasservolumen pro Zeiteinheit nicht übersteigt, hat man auch bereits Durchflussmengenregler geschaffen. So sind auch bereits Durchflussmengenregler vorbekannt, die einem Strahlregler in Durchflussrichtung vorgeschaltet oder zwischen einem solchen Strahlregler und einem zuströmseitigen Vorsatzsieb zwischengeschaltet werden können. Eine solche, aus Durchflussmengenregler und Strahlregler zusammengesetzte Funktionseinheit weist allerdings entweder eine vergleichsweise große Einbaulänge auf oder ist komplex und vielteilig aufgebaut.

Aus der gattungsbildenden WO 2011/006082 A1 ist bereits ein als Durchflussmengenregler ausgestaltetes sanitäres Einbauteil vorbekannt, das in dem Gehäuseinnenraum seines Einsetzgehäuses ein durchflussregelndes Funktionselement hat, das zumindest eine Durchflussöffnung aufweist, kegelförmig ausgestaltet und aus einem unter dem Druck des anströmenden Wassers komprimierbaren Material hergestellt ist. Die zumindest eine Durchflussöffnung wird im Funktionselement von einer Umfangswandung umgrenzt, die aufgrund der elastischen Materialbeschaffenheit des Funktionselementes unter dem Druck des zuströmenden Wassers derart gegen die Eigenelastizität des elastischen Materials formveränderbar ist, dass das zumindest eine Durchflussloch einen variablen Lochquerschnitt hat, der in Abhängigkeit vom Druck des zuströmenden Wassers zwischen einer Offenstellung und:einer Minimalstellung mit demgegenüber reduziertem Lochquerschnitt veränderbar ist. Da das kegelförmige Funktionselement eine gewisse Mindestlänge hat, wird die Einbauhöhe des vorbekannten Einbauteiles vergrößert und dessen vielseitige Einsetzbarkeit auch unter beengten Platzverhältnissen erschwert.

Aus der DE 10 2010 006 376 A1 kennt man bereits ein als Strahlregler ausgebildetes sanitäres Einbauteil, das in Abhängigkeit vom Wasserdruck entweder einen Brausestrahl oder einen bei hohen Drücken weniger zum Spritzen neigenden homogenen Gesamtstrahl formen soll. Um in Abhängigkeit vom Wasserdruck die Umstellung des Wassers von der einen auf die andere Strahlart zu bewirken, weist der vorbekannte Strahlregler zwei Strömungskammern oder Strömungskanäle auf, die jeweils eine Einströmöffnung und jeweils eine oder mehrere Wasseraustrittsöffnungen aufweisen. Die Steuerung des Zuflusses je Strömungskammer oder Strömungskanal erfolgt durch ein Ventil mit einem elastischen Ventilkörper, welches stromaufwärts der Strömungskammern oder Strömungskanäle angeordnet ist und die Einströmöffnungen mit dem elastischen Ventilkörper wahlweise verschließt oder freigibt, wobei eine Verformung des elastischen Ventilkörpers und somit eine Änderung der Ventilstellung durch eine Änderung des anstehenden Wasserdrucks oder durch mechanische Betätigung mittels eines Stellelements erfolgen kann. Ein Einregeln des durchfließenden Wassers auf ein druckunabhängig festgelegtes maximales Durchflussvolumen pro Zeiteinheit ist mit Hilfe des aus DE 10 2010 006 376 A1 vorbekannten Strahlreglers jedoch nicht möglich.

Aus der DE 20 2010 007 835 U1 ist bereits ein sanitäres Einbauteil vorbekannt, das einen zuströmseitigen Durchflussmengenregler, einen abströmseitig nachgeschalteten Strahlregler sowie ein dazwischen angeordnetes Vorsatzsieb hat. Um den Durchflussmengenregler auf das kegelförmige Vorsatzsieb aufsetzen zu können, ist das Reglergehäuse des Durchflüssmengenreglers schalenförmig ausgebildet, wobei der zur Abströmseite hin offene Schaleninnenraum des Reglergehäuses zur Aufnahme eines über den Stirnumfangsrandbereich des Strahlreglers vorstehenden Teilbereiches des Vorsatzsiebes bemessen ist. Da die Bestandteile des vorbekannten Einbauteiles als separate Funktionselemente ausgebildet sind, besteht die Gefahr, dass einzelne dieser Bestandteile während des Transports und der Lagerung des vorbekannten Einbauteiles verlorengehen und dass das vorbekannnte Einbauteil dann versehentlich in einem funktionswidrigen, weil nicht vollständigen Zustand, montiert wird. Darüber hinaus erfordern die in Strömungsrichtung einander nachgeschalteten Bestandteile eine gewisse Einbauhöhe, die jedoch nicht in jeder Auslaufarmatur zur Verfügung steht.

Es besteht daher insbesondere die Aufgabe, ein sanitäres Einbauteil der eingangs erwähnten Art zu schaffen, welches das durchfließende Wasser druckunabhängig auf ein festgelegtes maximales Durchflussvolumen pro Zeiteinheit einregeln kann und das dennoch vergleichsweise kompakt und einfach aufgebaut ist.

Die erfindungsgemäße Lösung dieser Aufgabe besteht bei dem sanitären Einbauteil der eingangs erwähnten Art insbesondere darin, dass die zumindest eine, ein Durchflussloch umgrenzende Umfangswandung zur Umsetzung einer Druckbeaufschlagung in axialer Richtung in eine radiale Einschnürbewegung entweder an ihrem in Durchströmrichtung orientierten freien Endbereich außenumfangsseitig eine Auflaufschräge hat, die mit einer Gegenschräge an einem Trägerteil zusammenwirkt, oder eine Einschnürung aufweist, mit einer in das Durchflussloch vorstehenden umlaufenden Biegezone.

Das erfindungsgemäße Einbauteil, das in eine Wasserleitung zwischengeschaltet oder am Wasserauslauf einer sanitären Auslaufarmatur montiert werden kann, weist im Gehäuseinnenraum seines Einsetzgehäuses ein durchflussregelndes Funktionselement auf. Dieses Funktionselement hat zumindest ein Durchflussloch; von denen wenigstens ein Durchflussloch von einer Umfangswandung umgrenzt ist, die unter dem Druck des zuströmenden Wassers derart gegen eine Rückstellkraft formveränderbar ist, dass das wenigstens eine Durchflussloch einen variablen Lochquerschnitt hat, der in Abhängigkeit vom Druck des zuströmenden Wassers zwischen einer Offenstellung und einer Minimalstellung mit demgegenüber reduziertem Lochquerschnitt veränderbar ist. Um die Druckbeaufschlagung durch den Wasserdruck in axialer Richtung in eine definierte radiale Einschnürbewegung der jeweils ein Durchflussloch umgrenzenden Umfangswandungen des Funktionselementes umzusetzen, ist erfindungsgemäß vorgesehen, dass die zumindest eine, ein Durchflussloch umgrenzende Umfangswandung zur Umsetzung einer Druckbeaufschlagung in axialer Richtung in eine radiale Einschnürbewegung entweder an ihrem in Durchströmrichtung orientierten freien Endbereich außenumfangsseitig eine Auflaufschräge hat, die mit einer Gegenschräge am Trägerteil zusammenwirkt, oder eine Einschnürung aufweist, mit einer in das Durchflussloch vorstehenden umlaufenden Biegezone. Mit zunehmenden Wasserdruck wird somit der Lochquerschnitt des wenigstens einen Durchflussloches ebenfalls derart zunehmend reduziert, das unabhängig vom Wasserdruck ein bestimmter festgelegter maximaler Volumenstrom (Volumen pro Zeiteinheit) nicht überschritten wird. Bei abnehmendem Wasserdruck wird der Lochquerschnitt des wenigstens einen Durchflüssloches wieder zunehmend vergrößert, so dass bei einem geringen Anfangsdruck der der Offenstellung entsprechende Lochquerschnitt zur Verfügung steht. Das in dem erfindungsgemäßen Einbauteil vorgesehene durchflussregelnde Funktionselement macht einen zusätzlichen Durchflussmengenregler entbehrlich und erlaubt eine kompakte und einfache Ausgestaltung des erfindungsgemäßen sanitären Einbauteiles.

Eine bevorzugte Ausführungsform gemäß der Erfindung sieht vor, dass das Funktionselement zumindest zweiteilig ausgestaltet ist und wenigstens ein, die mindestens eine, zumindest ein Durchflussloch umgrenzende Umfangswandung umfassendes Funktionsteil und ein, das wenigstens eine Funktionsteil tragendes Trägerteil aufweist.

Sofern auf zumindest ein, zwischen Funktionsteil und Trägerteil wirksames Federelement verzichtet werden soll, ist es vorteilhaft, wenn das das wenigstens eine Funktionsteil tragende Trägerteil aus einem gegenüber dem zuströmseitigen Funktionsteil formstabilen Material hergestellt ist und/oder eine zumindest partiell demgegenüber höhere Bauteilsteifigkeit hat.

Eine Weiterbildung gemäß der Erfindung sieht vor, dass ein auf die Zuströmseite des Funktionselementes wenigstens im Bereich des zumindest einen Durchflussloches in Durchströmrichtung einwirkender Wasserdruck einer Formveränderung des Funktionsteiles oder eine Materialverdrängung am Funktionsteil bewirkt, die in eine radiale Einschnürbewegung der wenigstens einen, zumindest ein Durchflussloch umgrenzenden Umfangswandung umsetzbar ist. Bei dieser weiterbildenden Ausführungsform kann der Wasserdruck, der wenigstens im Bereich des zumindest einen Durchflussloches auf die Zuströmseite des Funktionselementes in Durchströmrichtung einwirkt, eine Stauchung des Funktionselementes und damit eine Formveränderung öder eine Materialverdrängung bewirken, die gleichzeitig in eine bentsprechende radiale Einschnürbewegung der zumindest einen, wenigstens ein Durchflussloch umgrenzenden Umfangswandung und somit in eine Reduktion des lichten Lochquerschnitts umsetzbar ist.

Dabei kann es vorteilhaft sein, wenn die durch den Wasserdruck bewirkte Formveränderung oder Materialverdrängung eine zumindest partielle Dickenreduktion, Querschnittsreduktion, Höhenreduktion oder Kompression des Funktionsteiles ist.

Eine bevorzugte Ausführungsform gemäß der Erfindung sieht vor, dass die zumindest eine, ein Durchflussloch umgrenzende Umfangswandung eine Formgebung hat, die eine Druckbeaufschlagung durch den Wasserdruck in axialer Richtung in eine radiale Einschnürbewegung dieser Umfangswandung umsetzt. Durch die besondere Formgebung der jeweils ein Durchflussloch umgrenzenden Umfangswandungen kann die erfindungsgemäße Funktionseinheit den Durchfluss in einem definierten oder festgelegten Bereich einregeln.

Zweckmäßig ist es, wenn die zumindest eine, wenigstens ein Durchflussloch umgrenzende Umfangswandung als düsenförmige Ausformung des Funktionsteils ausgestaltet ist.

Damit sich der Lochquerschnitt des zumindest einen Durchflussloches unter dem Druck des zuströmenden Wassers verändert, kann es vorteilhaft sein, wenn die wenigstens eine düsenförmige Ausformung des Funktionsteils in ein Einsetzloch im Trägerteil eintaucht.

Damit sich der Lochquerschnitt des zumindest einen Durchflussloches unter dem Druck des zuströmenden Wassers verändert, kann es vorteilhaft sein, wenn das wenigstens eine

Einsetzloch sich in Durchströmrichtung unter Bildung einer Gegenschräge derart vorzugsweise konisch verjüngt, dass ein axiale Vorschubbewegung der düsenförmigen Ausformung in eine radiale Einschnürbewegung beispielsweise zumindest im freien Endbereich der Ausformung umsetzbar ist. Bewirkt der auf das Funktionsteil zuströmseitig einwirkende Wasserdruck eine axiale Vorschubbewegung auch der zumindest einen, an das Funktionsteil angeformten düsenförmigen Ausformung, wird diese axiale Vorschubbewegung gleichzeitig in eine radiale Einschnürbewegung im Bereich der zumindest einen Ausformung derart umgesetzt, dass sich der Lochquerschnitt des Durchflussloches von einer Offenstellung in Abhängigkeit vom Druck des zuströmenden Wassers zunehmend in eine Minimalstellung reduzierten Lochquerschnittes verändert.

Eine alternative Ausführungsform gemäß der Erfindung sieht vor, dass die wenigstens eine düsenförmige Ausformung eine in axialer Richtung derart nachgiebige Formgebung und damit eine derart reduzierte Bauteilsteifigkeit hat, dass eine axiale Stauchung der düsenförmigen Ausformung in eine radiale Einschnürbewegung im Bereich der Ausformung umsetzbar ist.

Damit das erfindungsgemäß verwendete Funktionselement den Volumenstrom auf einen festgelegten Maximalwert einregeln kann, ist es zweckmäßig, wenn der zuströmseitige Stirnrand des eine Ausformung aufnehmenden Einsetzloches im Trägerteil die druckbedingte axiale Relativbewegung des Funktionsteils begrenzt. Da der zuströmseitige Stirnrand des im Trägerteil vorgesehenen Einsetzloches die druckbedingte axiale Relativbewegung des Funktionsteils begrenzt, wird auch die Einschnürbewegung im Bereich der Ausformung derart definiert begrenzt, dass ein minimaler Lochquerschnitt nicht weiter unterschritten werden kann.

Damit eine axiale Relativbewegung der Ausformung in eine radiale Einschnürbewegung umgesetzt werden kann, kann es vorteilhaft sein, wenn der freie Stirnrand wenigstens einer Ausformung an einem Anschlag des Trägerteils, vorzugsweise an einer Anschlagsfläche, aufliegt.

Die einfache konstruktive Ausgestaltung und die leichte Herstellbarkeit des erfindungsgemäß verwendeten Funktionselements wird noch begünstigt, wenn das Funktionsteil einen scheiben- oder plattenförmigen Grundkörper hat und/oder wenn das Funktionsteil abströmseitig eine Mehrzahl von Ausformungen aufweist.

Damit sich die im Funktionselement vorgesehene und zumindest ein Durchflussloch umgrenzende Umfangswandung bei abnehmendem Wasserdruck in Folge der auf die Umfangswandung einwirkenden Rückstellkraft in seine der Offenstellung des wenigstens einen Durchflussloches entsprechende Formgestalt praktisch automatisch zurückbewegen kann, sieht eine bevorzugte Ausführungsform gemäß der Erfindung vor, dass zumindest ein Federelement als Rückstellkraft dient, und dass die Rückstellkraft des zumindest einen Federelements auf wenigstens zwei, in Durchflussrichtung voneinander beabstandete Teilbereiche der formnachgiebigen Umfangswandung übertragbar ist. Diese als Rückstellkraft dienende Rückstellfeder oder dergleichen Federelement kann unmittelbar an der zumindest ein Durchflussloch umgrenzenden Umfangswandung angreifen; möglich ist aber auch, dass die Umfangswandung an zwei voneinander beabstandeten Bauteilen gehalten ist, die ihrerseits durch zumindest ein Federelement auf Abstand gehalten werden. Dabei kann das zumindest eine Federelement als Wendel-Feder oder auch als gummielastisches Federelement ausgebildet sein.

Eine besonders einfache und kompakt auszugestaltende Ausführungsform gemäß der Erfindung sieht vor, dass die rückstellende Bauteilsteifigkeit der Umfangswandung des zumindest einen Durchflussloches und/oder die Eigenelastizität des für die zumindest eine Umfangswandung verwendeten Materials als Rückstellkraft vorgesehen ist. Bei dieser bevorzugten Ausführungsform kann die Anzahl der benötigten Federelemente reduziert oder auf solche Federelemente auch vollständig verzichtet werden. Eine solche Ausführungsform begünstigt daher die einfache Konstruktion und Herstellung des erfindungsgemäß vorgesehenen Funktionselementes und erleichtert dessen kompakte und platzsparende Ausgestaltung.

Eine besonders vorteilhafte Weiterbildung gemäß der Erfindung sieht vor, dass das sanitäre Einbauteil als Strahlregler ausgestaltet ist, der am Wasserauslauf einer sanitären Auslaufarmatur einen unvereinzelten Gesamtstrahl zu formen hat.

Bei einer solchen Ausführungsform gemäß der Erfindung kann vorteilhaft sein, wenn das Funktionselement des als Strahlregler ausgestalteten Einbauteiles als durchflussmengenregelnder Strahlzerleger ausgebildet ist. Dieser Strahlzerleger hat das zuströmende Wasser im Gehäuseinnenraum des Einsetzgehäuses zunächst in eine Vielzahl von Einzelstrahlen aufzuteilen, bevor diese Einzelstrahlen anschließend wieder zu einem unvereinzelten Gesamtstrahl am Wasserauslauf einer sanitären Auslaufarmatur zusammengeführt und geformt werden.

Das erfindungsgemäße Einbauteil kann bei Bedarf vorteilhaft als unbelüfteter Strahlregler ausgestaltet sein. Eine besonders vorteilhafte und bevorzugte Ausführungsform gemäß der Erfindung sieht jedoch vor, dass das sanitäre Einbauteil als belüfteter Strahlregler ausgebildet ist, und dass auf der Abströmseite des Strahlzerlegers am Gehäuseinnenumfang des Einsetzgehäuses zumindest eine Belüftungsöffnung vorgesehen ist, welche den Gehäuseinnenraum mit der Umgebungsluft verbindet. Das zu dem im Gehäuseinnenraum des Einsetzgehäuses befindlichen Strahlzerleger strömende Wasser erfährt im Bereich des Strahlzerlegers eine Geschwindigkeitserhöhung, die gemäß der Bernoullischen Gleichung auf der Abströmseite des Strahlzerlegers einen Unterdruck bewirkt. Durch den auf der Abströmseite des Strahlzerlegers gebildeten Unterdruck wird über die zumindest eine, am Gehäuseumfang vorgesehene Belüftungsöffnung Umgebungsluft angesaugt, die anschließend im Gehäuseinnenraum des Einsetzgehäuses mit dem durchströmenden Wasser zu einem perlend-weichen Wasserstrahl vermischt werden kann.

Um den mit dem Funktionselement verbundenen Konstruktions- und Herstellungsaufwand noch zusätzlich zu reduzieren, ist es zweckmäßig, wenn das Funktionselement an ein zuströmseitiges Gehäuseteil eines Strahlreglergehäuses angeformt ist und wenn das zuströmseitige Gehäuseteil mit einem abströmseitigen Gehäuseteil vorzugsweise lösbar verbindbar ist.

Möglich ist aber auch, dass das Funktionselement und vorzugsweise dessen Funktionsteil als ein in das Einsetzgehäuse und insbesondere in ein zuströmseitiges Gehäuseteil einsetzbares Einsetzteil ausgestaltet ist, und dass am Einsetzgehäuse beziehungsweise am Gehäuseteil und/oder am Umfangsrand des als Einsetzteil zuströmseitig ausgebildeten Funktionselementes beziehungsweise Funktionsteils wenigstens eine Dichtnase oder dergleichen Dichtvorsprung vorgesehen ist, der zwischen Einsetzgehäuse beziehungsweise Gehäuseteil einerseits und dem Funktionselement beziehungsweise seinem Funktionsteil andererseits radial abdichtet. Diese zumindest eine Dichtnase verhindert eine Leckage zumindest eines Wasseranteils am erfindungsgemäßen sanitären Einbauteil vorbei.

Zweckmäßig ist es, wenn in das abströmseitige Gehäuseteil zumindest ein Einsetzteil einer Strahlreguliereinrichtung einsetzbar ist.

Eine bevorzugte Ausführungsform gemäß der Erfindung sieht vor, dass die Auslaufstirnseite des abströmseitigen Gehäuseteils eine als Strömungsgleichrichter ausgestaltete wabenzellenartige Lochstruktur, eine Gitterstruktur oder eine Netzstruktur bildet.

Damit das aus elastischem Material bestehende Funktionsteil unter dem Druck des zuströmenden Wassers seine Form verändern oder damit dessen Material verdrängt werden kann, ist es zweckmäßig, wenn ein zwischen dem Funktionsteil und dem Trägerteil vorgesehener Zwischenraum über zumindest einen Entlüftungskanal mit der Umgebungsluft und vorzugsweise mit der Umgebungsluft im Gehäuseinnenraum des Einsetzgehäuses verbunden ist.

Dabei sieht eine bevorzugte Ausführungsform gemäß der Erfindung vor, dass der zumindest eine Entlüftungskanal das Trägerteil durchsetzt und eine Kanalöffnung hat, die auf der Abströmseite des Trägerteils vorgesehen ist. Da auf der Abströmseite des Trägerteils beim Durchströmen des Wassers durch die Durchflussöffnungen regelmäßig ein Unterdruck entsteht, ist die Druckdifferenz auch im Bereich dieser Kanalöffnung am größten, so dass die Wirkung des Entlüftungskanals noch zusätzlich begünstigt wird.

Möglich ist aber auch, dass zusätzlich oder stattdessen der zumindest eine Entlüftungskanal das Funktionsteil durchsetzt und eine dem Zwischenraum abgewandte Kanalöffnung hat, die auf der Zuströmseite des Funktionsteils vorgesehen ist.

Um den Lochquerschnitt eines jeden Durchflussloches in Abhängigkeit vom Druck des zuströmenden'Wassers auf einfache Weise verändern zu können, sieht eine bevorzugte Weiterbildung gemäß der Erfindung vor, dass das Funktionsteil und vorzugsweise dessen scheiben- oder plattenförmiger Grundkörper in einer unbelasteten Ausgangsstellung vom Trägerteil beabstandet ist und unter dem Druck des zuströmenden Wassers sich gegen die rückstellende Bauteilsteifigkeit und/oder die Eigenelastizität zumindest eines Teilbereiches des Funktionsteils dem Trägerteil annähert oder an das Trägerteil anlegt.

Um dazu auf den, unter dem Druck des zuströmenden Wassers in Richtung zum Trägerteil bewegten Grundkörper des Funktionsteiles eine in die Ausgangsstellung wirksame Rückstellkraft einwirken zu lassen, ist es vorteilhaft, wenn das Funktionsteil an seinem äußeren Umfangsrandbereich unverrückbar im Einsetzgehäuse gehalten ist.

Dabei sieht eine bevorzugte Ausführungsform gemäß der Erfindung vor, dass das Funktionsteil mit seinem äußeren Umfangsrandbereich auf dem benachbarten Umfangsrandbereich des Trägerteils aufliegt.

Damit das zwischen einer unbelasteten und vom Trägerteil beabstandeten Ausgangsstellung einerseits und einer in Richtung zum Trägerteil gedrückten Position andererseits bewegbare Funktionsteil bei nachlassendem Wasserdruck in die Ausgangsstellung zurückbewegt werden kann, ist es vorteilhaft, wenn zwischen dem Trägerteil und dem Funktionsteil zumindest ein vorzugsweise stiftförmiger Abstandhalter vorgesehen ist, der unter dem Druck des zuströmenden Wassers eine als Rückstellkraft wirksame elastische Verformung des Funktionsteils bewirkt. Dieser Abstandhalter kann beispielsweise an die Abströmseite des Funktionsteils einstückig angeformt und ebenfalls aus elastischem Material hergestellt sein, so dass ein solcher, vorgespannter oder druckbeaufschlagter Abstandhalter eine gummielastische Federwirkung ausübt. Ein vorteilhaftes Ausführungsbeispiel gemäß der Erfindung sieht daher vor, dass an das Funktionsteil abströmseitig zumindest ein stiftförmiger Abstandhalter einstückig angeformt ist, der unter dem Druck des zuströmenden Wassers eine als Rückstellkraft wirkende Verformung erfährt.

Eine andere Ausführungsform gemäß der Erfindung sieht demgegenüber vor, dass der zumindest eine Abstandhalter auf der Zuströmseite des Trägerteils einstückig angeformt ist. Dabei kann es vorteilhaft sein, wenn der Abstandhalter mit seinem freien Stiftende in eine hutförmige Ausformung des Funktionsteils eingreift oder eintaucht, und wenn die vorzugsweise dickenreduzierte Umfangswandung der hutförmigen Ausformung durch das unter Druck in Richtung zum Trägerteil bewegte Funktionsteil gummielastisch streckbar ist.

Eine besonders vorteilhafte und aus einer reduzierten Anzahl von Bauteilen bestehende Ausführung sieht vor, dass der auf dem benachbarten Umfangsrandbereich des Trägerteils aufliegende Umfangsrandbereich des Funktionsteils als Ringdichtung zwischen dem Einbauteil und einer zuströmseitigen Gegenfläche einer mit dem Einbauteil verbindbaren Auslaufarmatur ausgestaltet ist.

Damit bei der Montage des erfindungsgemäßen Einbauteiles am Wasserauslauf einer sanitären Auslaufarmatur sich der als Ringdichtung dienende Umfangsrandbereich des Funktionsteils nicht beispielsweise durch eine Drehbewegung unbeabsichtigt lösen und verformen kann, ist es zweckmäßig, wenn der äußere Umfangsrandbereich des Funktionsteiles und der benachbarte Umfangsrandbereich des Trägerteiles aneinander lösbar fixierbar sind.

Dabei sieht eine bevorzugte Ausführungsform gemäß der Erfindung vor, dass der äußere Umfangsrandbereich des Funktionsteils zumindest einen Hinterschnitt am benachbarten Umfangsrandbereich des Trägerteiles untergreift und dass eine Lösebewegung des den Hinterschnitt untergreifenden Umfangsrandbereiches des Funktionsteiles mittels eines zuströmseitigen und zumindest bereichsweise in das Funktionsteil einsetzbaren Bauteiles, insbesondere mittels einem Vorsatzsieb, blockierbar ist. Durch das in das Funktionsteil eingesetzte Bauteil, das beispielsweise ein Vorsatzsieb sein kann, wird der als Ringdichtung ausgestaltete Umfangsrandbereich des Funktionsteiles in seiner Position gehalten, in welcher dieser Umfangsrandbereich des Funktionsteiles den am Trägerteil vorgesehenen Hinterschnitt untergreift.

Damit sich die am freien Endbereich einer jeden Umfangswandung vorgesehene und beispielsweise durch eine konische Verjüngung des freien Endbereichs einer düsenförmigen Ausformung gebildete Auflaufschräge auf der entsprechenden Gegenschräge am Trägerteil derart bewegen und verformen kann, ohne dass störende Reibkräfte dem entgegenwirken, ist es vorteilhaft, wenn das wenigstens eine Einsetzloch im Trägerteil in seinem sich konisch verjüngenden Lochabschnitt in Umfangsrichtung voneinander beabstandete und insbesondere leistenförmige Gleitausformungen hat, die mit ihrer Längserstreckung zur Lochöffnung orientiert sind und die der freie Endbereich einer düsenförmigen Ausformung des Funktionsteiles beaufschlagt.

Weiterbildungen gemäß der Erfindung ergeben sich aus der Beschreibung in Verbindung mit den Zeichnungen. Nachstehend werden bevorzugte Ausführungsformen gemäß der Erfindung noch näher anhand der Zeichnung dargestellt.

Es zeigt:

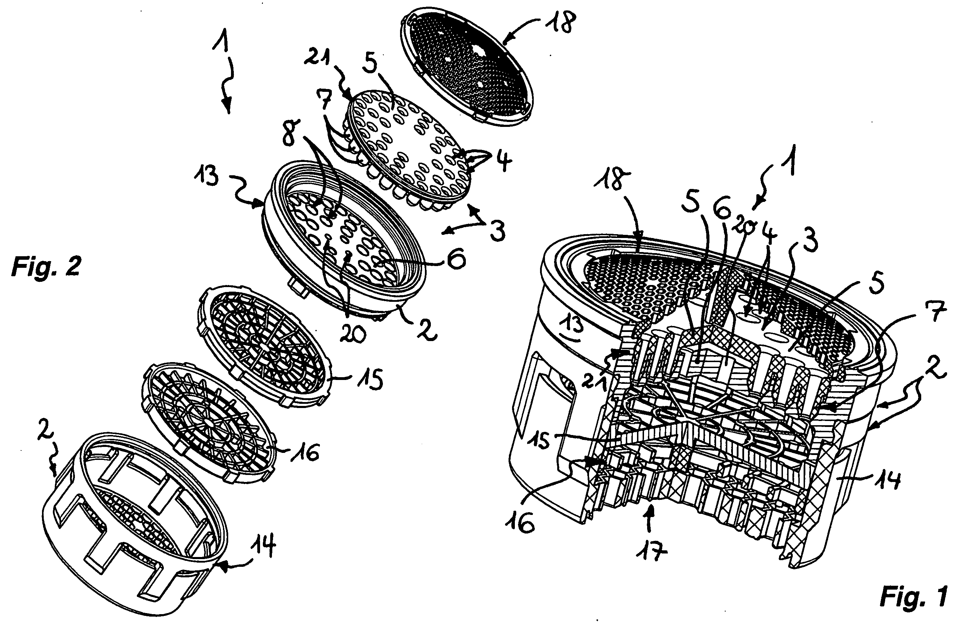

- Fig. 1: ein als Strahlregler ausgestaltetes und hier in einer teilweise aufgeschnittenen Perspektivdarstellung gezeigtes sanitäres Einbauteil mit einem Einsetzgehäuse, in dessen Gehäuseinnenraum ein als Strahlzerleger dienendes Funktionselement vorgesehen ist, das ein abströmseitiges Trägerteil und ein zuströmseitiges Funktionsteil aus demgegenüber elastischem Material aufweist, an welchem Funktionsteil mehrere, jeweils ein Durchflussloch umgrenzender Ausformungen angeformt sind, die jeweils derart in eine zuströmseitige Einformung im Trägerteil vorstehen, dass eine axiale Vorschubbewegung in eine radiale Einschnürbewegung im freien Endbereich einer jeden Ausformung umsetzbar ist,
- Fig. 2: das Einbauteil aus Fig. 1 in einer auseinandergezogenen Perspektivdarstellung seiner Bestandteile,
- Fig. 3: das mit dem als Strahlzerleger ausgebildeten Funktionselement verbundene zuströmseitige Gehäuseteil des Strahlreglers gemäß den Fig. 1 bis 2 in einer Draufsicht auf die Zuströmseite,
- Fig. 4: das mit dem als Strahlzerleger dienenden Funktionselement verbundene zuströmseitige Gehäuseteil aus Fig. 3 in einem Längsschnitt durch Schnittebene IV-IV in Fig. 3,
- Fig. 5: einen Detail-Längsschnitt des in Fig. 4 gezeigten Funktionselements in der Offenstellung seiner Durchflusslöcher,
- Fig. 6: das mit dem Funktionselement verbundene zuströmseitige Gehäuseteil des sanitären Einbauteiles gemäß den Fig. 1 bis 3 in einer Draufsicht auf die Zuströmseite,
- Fig. 7: das mit dem als Strahlzerleger dienenden Funktionselement verbundene zuströmseitige Gehäuseteil in einem Längsschnitt durch Schnittebene VII-VII aus Fig. 6,
- Fig. 8: einen Detail-Längsschnitt des bereits in Fig. 7 gezeigten Funktionselements in der Minimalstellung seiner Durchflusslöcher,
- Fig. 9: ein mit Fig. 1 bis 8 vergleichbar ausgestaltetes und hier ebenfalls in einer teilweise aufgeschnittenen Perspektivdarstellung gezeigtes sanitäres Einbauteil, bei dem die an das Funktionsteil des Funktionselements angeformten düsenförmigen Ausführungen eine in axialer Richtung derart nachgiebige Formgebung und damit eine derart reduzierte Bauteilsteifigkeit aufweisen, dass eine axiale Stauchung der düsenförmigen Ausformungen in eine radiale Einschnürbewegung im Bereich dieser Ausformungen umsetzbar ist,
- Fig. 10: das sanitäre Einbauteil aus Fig. 9 in einer auseinandergezogenen Perspektivdarstellung seiner Bestandteile,
- Fig. 11: das mit dem Funktionselement verbundene zuströmseitige Gehäuseteil des sanitären Einbauteiles gemäß den Fig. 9 und 10 in einer Draufsicht auf die Zuströmseite,
- Fig. 12: das mit dem Funktionselement verbundene zuströmseitige Gehäuseteil des als Strahlregler ausgebildeten sanitären Einbauteiles gemäß den Fig. 9 und 10 in einem Längsschnitt durch Schnittebene XII-XII in Fig. 11,
- Fig. 13: einen Detail-Längsschnitt des als Strahlzerleger ausgebildeten Funktionselements aus Fig. 12 in der Offenstellung seiner Durchflusslöcher,
- Fig. 14: das mit dem als Strahlzerleger dienenden Funktionselement verbundene zuströmseitige Gehäuseteil des als Strahlregler ausgebildeten sanitären Einbauteiles gemäß den Fig. 9 und 10 in einer Draufsicht auf die Zuströmseite,
- Fig. 15: das mit dem als Strahlzerleger ausgebildeten Funktionselement verbundene Gehäuseteil aus Fig. 14 in einem Längsschnitt durch Schnittebene XV-XV in Fig. 14,
- Fig. 16: einen Detail-Längsschnitt des als Strahlzerleger dienenden Funktionselements aus Fig. 14 und 15 in der Minimalstellung seiner Durchflusslöcher,
- Fig. 17: ein weiteres Ausführungsbeispiel des mit dem als Strahlzerleger dienenden Funktionselement verbundenen zuströmseitigen und mit Fig. 7 vergleichbaren Gehäuseteiles,
- Fig. 18: das Gehäuseteil aus Fig. 17 in einem Detail-Längsschnitt in dem in Fig. 17 gekennzeichneten Bereich,
- Fig. 19: das mit dem als Strahlzerleger dienenden Funktionselement verbundene zuströmseitigen Gehäuseteil des als Strahlregler ausgebildeten sanitären Einbauteiles gemäß Fig. 17 und 18, wobei in Figur 19 die Schnittebene des in Fig. 17 gezeigten Längsschnittes angedeutet ist, und
- Fig. 20: das als Strahlzerleger dienende Funktionselement aus den Fig. 17 bis 19 in einer perspektivischen Einzelteildarstellung.

In den Fig. 1 bis 8, Fig. 9 bis 16 und Fig. 17 bis 20 sind drei verschiedene Ausführungen 1, 100 und 101 eines sanitären Einbauteiles und seiner wesentlichen Bestandteile dargestellt. Die sanitären Einbauteile 1, 100, 101 weisen ein Einsetzgehäuse 2 auf, das unmittelbar oder - wie hier - mit Hilfe eines nicht weiter gezeigten Auslaufmundstücks am Wasserauslauf einer sanitären Auslaufarmatur montierbar ist. Im Gehäuseinnenraum des Einsetzgehäuses 2 ist ein als Strahlzerleger ausgebildetes Funktionselement 3 vorgesehen, das eine Vielzahl von Durchflusslöchern 4 hat, die das zuströmende Wasser in eine entsprechende Vielzahl von Einzelstrahlen aufteilen.

Zumindest ein Durchflussloch 4 und vorzugsweise - wie hier - alle Durchflusslöcher 4 des Funktionselements 3 weisen einen hindernisfreien lichten Lochquerschnitt auf und sind von einer Umfangswandung umgrenzt, die unter dem Druck des zuströmendes Wassers derart gegen eine Rückstellkraft formveränderbar ist, dass das zumindest eine Durchflussloch 4 einen variablen Lochquerschnitt hat, der in Abhängigkeit vom Druck des zuströmenden Wassers zwischen einer Offenstellung und einer Minimalstellung mit demgegenüber reduziertem Lochquerschnitt veränderbar ist. Dabei ist hier die rückstellende Bauteilsteifigkeit der wenigstens einen, zumindest ein Durchflussloch 4 umgrenzenden Umfangswandung und/oder die Eigenelastizität des für die zumindest eine Umfangswandung verwendeten Materials als Rückstellkraft vorgesehen. Mit zunehmenden Wasserdruck wird somit der Lochquerschnitt ebenfalls derart zunehmend reduziert, dass unabhängig vom Wasserdruck ein bestimmter festgelegter maximaler Volumenstrom nicht überschritten wird. Bei abnehmendem Wasserdruck wird der Lochquerschnitt wieder zunehmend vergrößert, so dass bei einem geringen Anfangsdruck der der Offenstellung entsprechende Lochquerschnitt zur Verfügung steht. Das als Strahlzerleger ausgebildete Funktionselement 3 macht somit einen zusätzlichen Durchflussmengenregler entbehrlich und kann zudem das zuströmende Wasser in eine Vielzahl von Einzelstrahlen aufteilen, wobei das Funktionselement 3 die kompakte und einfache Ausgestaltung der hier dargestellten Einbauteile 1, 100, 101 wesentlich begünstigt.

Das durchflussregelnde Funktionselement 3 weist eine Vielzahl von Durchflusslöchern 4 auf, die strömungsgünstig und/oder düsenförmig ausgeführt sind. Durch die hohe Anzahl von Durchflusslöchern 4 im Funktionselement 3 und/oder durch die strömungsgünstige Ausgestaltung dieser Durchflusslöcher 4 wird ein geräuschbildender Strömungsabriss in diesem Bereich der Bauteile 1, 100, 101 verhindert und somit eine unerwünschte Geräuschbildung vermieden. Das Funktionselement 3 der sanitären Einbauteile 1, 100, 101 vereint somit die Funktion einer wirkungsvollen Strahlzerlegung einerseits und einer wirkungsvollen Durchflussmengenregulierung andererseits in sich.

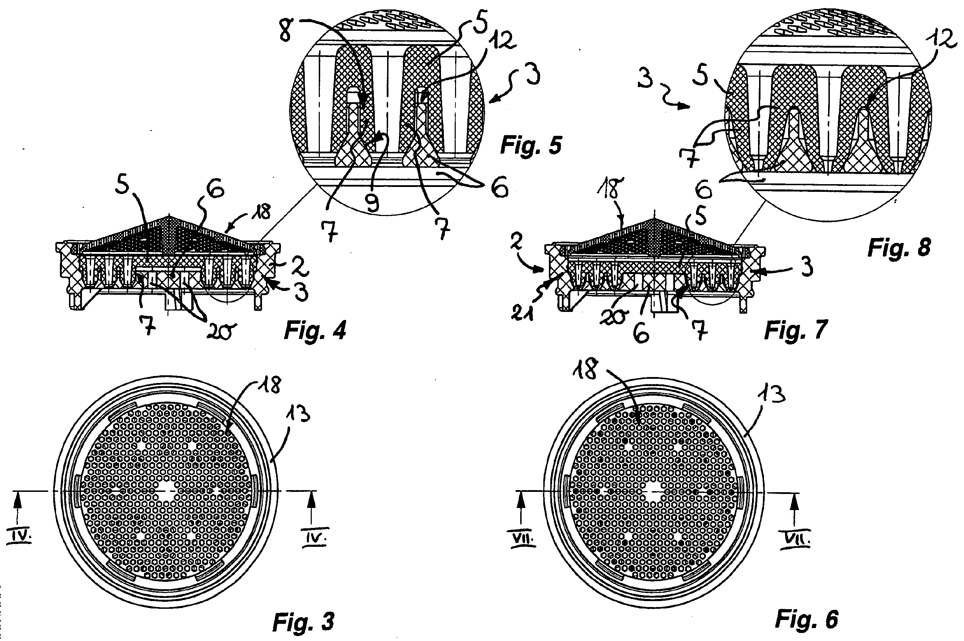

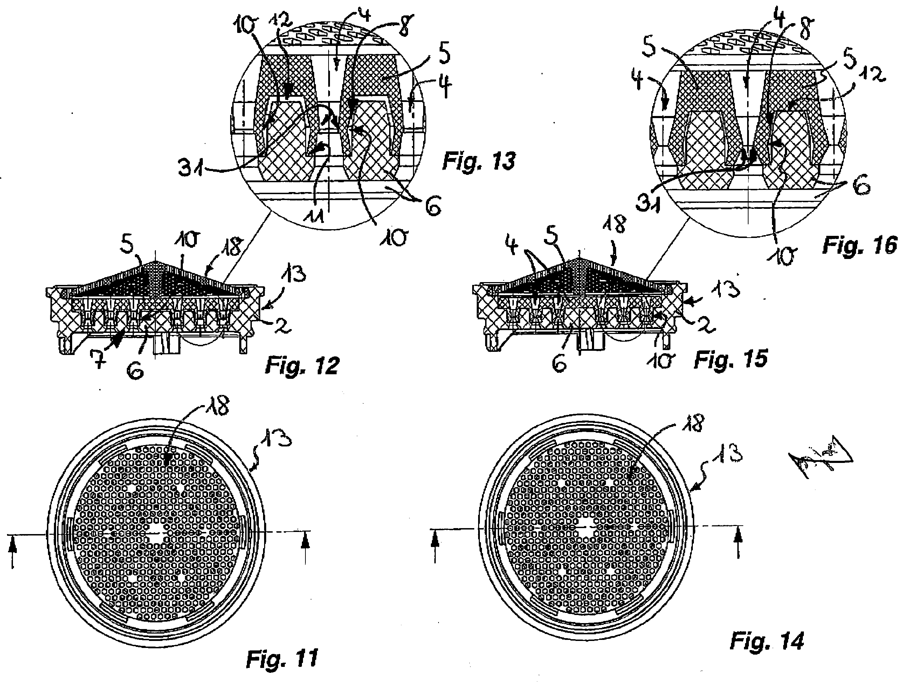

Aus einem Vergleich der Fig. 5 und 8 einerseits und der Fig. 13 und 16 andererseits, welche beispielhaft die im Funktionselement 3 vorgesehenen Durchflusslöcher 4 in ihrer Offenstellung und in ihrer, einen demgegenüber reduzierten Lochquerschnitt aufweisenden Minimalstellung zeigen, wird deutlich, dass ein auf die Zuströmseite des Funktionselements 3 wenigstens im Bereich der Durchflusslöcher 4 in Durchströmrichtung einwirkender Wasserdruck eine Formveränderung und hier eine Höhenreduktion des Funktionselements 3 bewirkt, die in eine radiale Einschnürbewegung der Durchflusslöcher 4 umsetzbar ist.

Das als Strahlzerleger ausgebildete Funktionselement 3 der hier dargestellten Einbauteile 1, 100, 101 ist dazu zumindest zweiteilig ausgestaltet und weist ein Funktionsteil 5 aus elastischem Material und/oder mit einer partiell reduzierten Bauteilsteifigkeit sowie ein, das Funktionsteil 5 tragendes Trägerteil 6 aus einem demgegenüber formstabilen Material auf. Das Funktionsteil 5 hat einen scheiben- oder plattenförmigen Grundkörper 30, an dessen Abströmseite eine Vielzahl von düsenförmiger Ausformungen 7 vorstehen, die jeweils eine, ein Durchflussloch 4 umgrenzende Umfangswandung bilden. Jeder dieser düsenförmigen Ausformungen 7 steht in ein Einsetzloch 8 im Trägerteil 6 vor. Durch die Anzahl der Durchflusslöcher 4 im Funktionselement 3 und/oder durch die Formgebung der die Ausformungen 7 in sich aufnehmenden Einsetzlöcher 8 des Trägerteils 6 lässt sich der Volumenstrom des in den sanitären Einbauteilen 1, 100, 101 verwendeten Funktionselements 3 verändern. In den Fig. 1, 2, 4, 7 und 20 ist erkennbar, dass beispielsweise das Trägerteil 6 des Funktionselements 3 wenigstens einen Entlüftungskanal mit einer Kanalöffnung 20 aufweisen kann, die den zwischen Funktionsteil 5 und Trägerteil 6 angeordneten Zwischenraum 22 hier mit dem auf der Abströmseite des Funktionselements 3 angeordneten Bereich des Gehäuseinnenraums des Einbauteiles 1 verbindet. Dieser zumindest eine Entlüftungskanal wirkt einem übermäßig festen Anhaften des hier als Belag ausgebildeten Funktionsteils 5 am Trägerteil 6 entgegen, welches Anhaften andernfalls die Rückstellbewegung des Funktionsteils 5 in die Offenstellung des Funktionselementes 3 behindern könnte. Durch die zumindest eine Kanalöffnung 20 kann auch solches Leckwasser abfließen, das sich im Zwischenraum 22 zwischen Funktionsteil 5 und Trägerteil 6 befindet. Das Funktionsteil 5 des im Einbauteil 1 verwendeten Funktionselements 3 kann beispielsweise aus Silikon oder aus einem anderen elastischen Werkstoff hergestellt sein, welcher Werkstoff eine vergleichsweise geringe Werkstoffsteifigkeit aufweist.

In den Figuren 1 bis 18 ist angedeutet, dass die zumindest eine, ein Durchflussloch 4 umgrenzende Umfangswandung eine Formgebung hat, die eine Druckbeaufschlagung durch den Wasserdruck in axialer Richtung in eine radiale Einschnürbewegung dieser Umfangswandung umsetzt. Bei den in den Figuren 1 bis 8 und Figuren 17 bis 18 dargestellten Ausführungsbeispielen weisen die, jeweils ein Durchflussloch 4 umgrenzenden Umfangswandungen an ihrem, in Durchströmrichtung orientierten freien Endbereich außenumfangsseitig eine Auflaufschräge auf, die zur Umsetzung einer Druckbeaufschlagung in axialer Richtung in eine radiale Einschnürbewegung mit einer Gegenschräge am Trägerteil 6 zusammenwirkt.

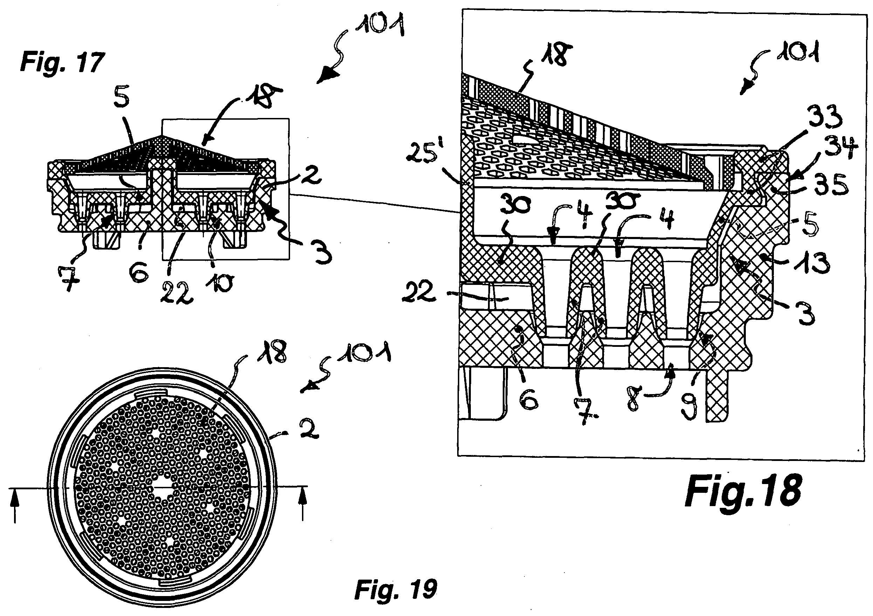

In den Fig. 1 bis 8 sowie den Fig. 17 bis 18 und insbesondere in den Fig. 5 und 18 ist erkennbar, dass dazu jedes Einsetzloch 8 in Durchströmrichtung derart vorzugsweise konisch verjüngt ist, dass eine axiale Vorschubbewegung der düsenförmigen Ausformungen 7 in eine radiale Einschnürbewegung zumindest im freien Endbereich dieser Ausformungen 7 umsetzbar ist. Die ein Einsetzloch 8 umgrenzende Umfangswandung des Trägerteils 6 verjüngt sich dazu an ihrem abströmseitigen Endbereich derart konisch, dass die Umfangswandung in diesem Teilbereich des Einsetzlochs 8 eine Gegenschräge 9 bildet, die bei einer druckbedingten axialen Vorschubbewegung des Funktionsteils 5 sowie der an ihn angeformten Ausformungen 7 die freien, sich konisch zu einer Auflaufschräge verjüngenden Endbereiche einer jeden Ausformung 7 im Sinne einer Einschnürbewegung nach innen einformt.

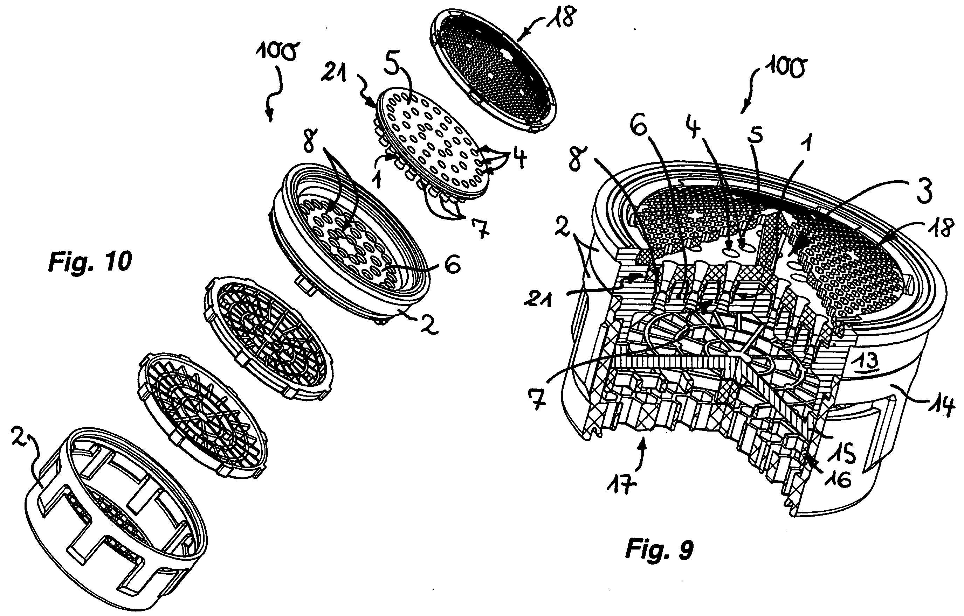

Bei dem in den Fig. 9 bis 16 gezeigten Ausführungsbeispiel 100 weisen die düsenförmigen Ausformungen 7 demgegenüber eine in axialer Richtung derart nachgiebige Formgebung und somit zusätzlich auch eine derart reduzierte Bauteilsteifigkeit auf, dass eine axiale Stauchung der düsenförmigen Ausformungen 7 in eine radiale Einschnürbewegung im Bereich der Ausformungen 7 umsetzbar ist. Auch die die Ausformungen 7 bildenden Umfangswandungen des in den Figuren 9 bis 16 gezeigten Ausführungsbeispieles 100 weisen eine Formgebung auf, die eine Druckbeaufschlagung durch den Wasserdruck in axialer Richtung in eine radiale Einschnürbewegung dieser Umfangswandungen umsetzt. Die bei dem Ausführungsbeispiel 100 vorgesehenen Umfangswandungen, die jeweils ein Durchflussloch 4 umgrenzen, haben dazu eine Einschnürung 10 mit einer in das Durchflussloch 4 vorstehenden umlaufenden Biegezone 31, die bei einer axialen Stauchung der Ausformungen 7 eine radiale Bewegung dieser Biegezone 31 in den lichten Lochquerschnitt des betreffenden Durchflussloches 4 bewirken und somit eine radiale Einschnürbewegung im Bereich der mittigen Einschnürungen 10 vorgeben. Um eine axiale Stauchung der an das Funktionsteil 5 angeformten Ausformungen 7 zu begünstigen, liegt der freie Stirnrand einer jeden Ausformung 7 an einem hier als Anschlagsflansch oder Anschlagsfläche 11 ausgebildeten Anschlag des Trägerteils 6 auf.

Aus einem Vergleich der Fig. 5 und 8 einerseits und der Fig. 13 und 16 andererseits ist erkennbar, dass der zuströmseitige Stirnrand 12 des eine Ausformung 7 aufnehmenden Einsatzlochs 8 im Trägerteil 6 einen Anschlag bildet, welcher die druckbedingte axiale Relativbewegung des Funktionsteils 5 begrenzt. Während das Funktionsteil 5 sich in der Offenstellung des Lochquerschnitts mit Abstand oberhalb des als Anschlag dienenden Stirnrandes 12 befindet, liegt das Funktionsteil 5 in der Minimalstellung des Lochquerschnitts auf diesem Stirnrand 12 auf, wodurch die Einschnürbewegung begrenzt wird.

In den Fig. 1 und 9 ist erkennbar, dass die Einbauteile 1, 100, 101 hier als belüfteter Strahlregler ausgebildet sind, der einen unverzeinzelten Gesamtstrahl zu formen hat. Dabei ist das Funktionselement 3 der als Strahlregler ausgestalteten Einbauteile 1, 100, 101 als durchflussmengenregelnder Strahlzerleger ausgebildet. Auf der Abströmseite des als Strahlzerleger dienenden Funktionselementes 3 ist am Gehäuseumfang des Einsetzgehäuses 2 zumindest eine Belüftungsöffnung 32 vorgesehen, die den Gehäuseinnenraum des Einsetzgehäuses 2 mit der Umgebungsluft verbindet. Da auf der Abströmseite des Strahlzerlegers beim Durchfließen des Wassers durch die Durchflusslöcher 4 ein Unterdruck entsteht, wird die Umgebungsluft durch die zumindest eine Belüftungsöffnung 32 in den Gehäuseinnenraum des Einsetzgehäuses 2 eingesaugt, um dort mit dem durchströmenden Wasser zu einem perlend-weichen Wasserstrahl geformt zu werden. Dabei ist das Trägerteil 6 des als Strahlzerleger ausgebildeten Funktionselements 3 an ein zuströmseitiges Gehäuseteil 13 des Einsetzgehäuses 2 einstückig angeformt. Das zuströmseitige Gehäuseteil 13 ist mit einem abströmseitigen Gehäuseteil 14 hier lösbar verbindbar; möglich ist aber auch, die Gehäuseteile 13 und 14 beispielsweise durch Verkleben oder Ultraschallschweißen unlösbar miteinander zu verbinden. Das vom Trägerteil 6 getragene Funktionsteil 5, das von der Zuströmseite aus in das Gehäuseteil 13 eingelegt ist und auch als elastischer Belag ausgebildet sein kann, weist an seinem Umfangsrand eine Dichtnase 21 auf, die ein unerwünschtes Eindringen von Leckwasser in den zwischen Funktionsteil 5 und Trägerteil 6 befindlichen Zwischenraum verhindern soll.

Die vom Funktionselement 3 gebildeten Einzelstrahlen werden derart beschleunigt, dass auf der Abströmseite des Funktionselements 3 ein Unterdruck entsteht. Durch den auf der Abströmseite des Funktionselements 3 erzeugten Unterdruck wird Umgebungsluft in den Gehäuseinnenraum angesaugt, die dort mit den Einzelstrahlen vermischbar ist. Die mit Umgebungsluft durchmischten Einzelstrahlen werden anschließend mit Hilfe des zumindest einen Einsetzteiles 15, 16 einer Strahlreguliereinrichtung abgebremst, welche Einsetzteile 15, 16 von der Zuströmseite aus in das hülsenförmige abströmseitige Gehäuseteil 14 eingesetzt sind. Diese Einsetzteile 15, 16 der Strahlreguliereinrichtung können eine Gitter- oder Netzstruktur aus sich an Kreuzungsknoten kreuzenden Stegen aufweisen. Nach Passieren eines abströmseitigen Strömungsgleichrichters 17, der die Auslaufstirnseite des Gehäuseteiles 14 bildet und eine wabenzellenartige Lochstruktur oder ebenfalls eine Gitter- oder Netzstruktur aufweisen kann, tritt das ausströmende Wasser als homogener, nicht-spritzender und perlend-weicher Gesamtstrahl aus.

Da die Kanalöffnung 20 des zumindest einen, das Trägerteil 6 durchsetzenden Entlüftungskanals auf der Abströmseite des Trägerteils 6 angeordnet ist, und da das durch die Durchflusslöcher 4 durchströmende Wasser in diesem Bereich einen Unterdruck erzeugt, ist die Druckdifferenz zur Atmosphäre in diesem Bereich am höchsten, um die entlüftende Wirkung des zumindest einen Entlüftungskanals zu begünstigen.

Das in den Figuren 17 bis 20 dargestellte Einbauteil 101 entspricht in seinem Aufbau weitestgehend den in den Fig. 1 bis 16 gezeigten Ausführungsbeispielen 1, 100. In den Fig. 17 und 18 ist gut zu erkennen, dass zwischen dem aus elastischem Material bestehenden Funktionsteil 5 und dem demgegenüber formstabilen Trägerteil 6 ein Zwischenraum 22 vorgesehen ist, der durch den zumindest einen und hier als Trägerteil 6 durchsetzenden Entlüftungskanal entlüftet werden kann. In der in den Fig. 17 und 18 gezeigten unbelasteten Ausgangsstellung ist der scheibenoder plattenförmige Grundkörper des Funktionsteiles 5 vom Trägerteil 6 unter Bildung des Zwischenraums 22 beabstandet. Unter dem Druck des zuströmenden Wassers nähert sich der Grundkörper des Funktionsteiles 5 gegen die Eigenelastizität des dafür verwendeten elastischen Materials an die Zuströmseite des Trägerteils 6 an.

Dabei werden die freien Endbereiche der düsenförmigen Ausformungen 7 gegen die eine Gegenschräge 9 bildende und sich konisch verjüngende Umfangswandung des zugeordneten und im Trägerteil 6 vorgesehenen Einsetzloches 8 gepresst, derart, dass diese axiale Bewegung des Funktionsteiles 5 und dessen dadurch entstehende Formveränderung in eine radiale Einschnürbewegung der wenigstens einen, zumindest ein Durchflussloch 4 umgrenzenden Umfangswandung der düsenförmigen Ausformung 7 umsetzbar ist. Bei nachlassendem Wasserdruck bewegt sich das Funktionsteil 5 zurück in seine vom Trägerteil 6 beabstandete Ausgangsstellung, wobei die Durchflusslöcher 4 in den Ausformungen 7 wieder ihre Offenstellung einnehmen.

Um auf das vom Wasser in Richtung zum Trägerteil 6 gedrückte Funktionsteil 5 eine Rückstellkraft in Richtung zur Ausgangsstellung auszuüben, ist das Funktionsteil 5 an seinem äußeren Umfangsrandbereich unverrückbar im Einsatzgehäuse 2 gehalten. Dazu liegt das Funktionsteil 5 mit seinem äußeren Umfangsrandbereich 33 auf dem benachbarten zuströmseitigen Umfangsrandbereich 34 des Trägerteils 6 auf.

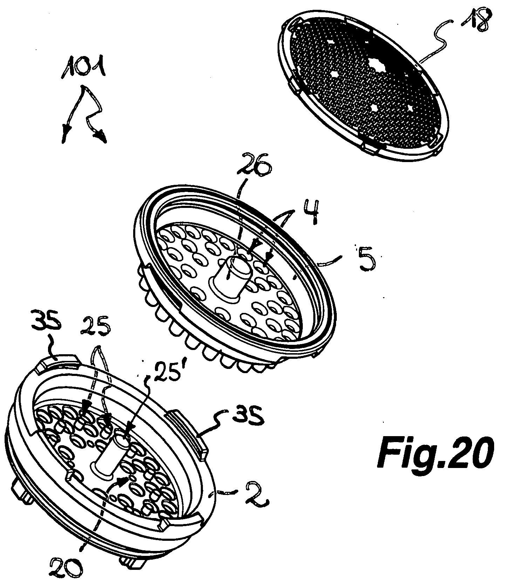

Aus einem Vergleich der Fig. 18 und 20 wird deutlich, dass zwischen dem Trägerteil 6 und dem Funktionsteil 5 vorzugsweise - wie hier - mehrere Abstandhalter 25, 25' vorgesehen sind, die an das Trägerteil 6 zuströmseitig einstückig angeformt sind. Diese Abstandhalter 25, 25' bewirken eine als Rückstellkraft wirksame elastische Verformung des aus elastischem Material hergestellten Funktionsteils 5, so dass bei nachlassendem Wasserdruck auch in den Bereichen der stiftförmigen Abstandhalter 25, 25' eine durch die Eigenelastizität des Funktionsteiles 5 ausgeübte Rückstellkraft auf das Funktionsteil 5 in Richtung zur Ausgangsstellung ausgeübt wird. Während der Abstandshalter 25' etwa mittig angeordnet ist und zentrierend in eine hutförmige Ausformung 23 am Funktionsteil 5 vorsteht, sind die übrigen Abstandshalter 25' in gleichem Abstand zum zentralen Abstandshalter 25' und in gleichmäßigen Abständen zueinander angeordnet. Der im Einsetzgehäuse 2 unverrückbar gehaltene Umfangsrandbereich 33 des elastischen Funktionsteiles 5 und die auf den elastischen Grundkörper des Funktionsteiles 5 einwirkenden Abstandhalter 25, 25'bilden eine gummielastische Rückstellkraft, die in Richtung zur Ausgangsstellung des Funktionsteiles 5 wirksam ist. Dabei kann die Rückstellkraft durch eine auf das Funktionsteil 5 beim Einbau in das Einsetzgehäuse 2 aufgebrachte Vorspannung eingestellt werden. Eine solche Vorspannung ergibt sich beispielsweise bei einem deformierten Einbau des Funktionsteiles 5 und insbesondere seines scheibenoder plattenförmigen Grundkörpers 30 in das Einsetzgehäuse 2. Auch ist es möglich, dass die freien Enden der Abstandhalter 25, 25' erst bei einem erhöhtem Wasserdruck von dem Funktionsteil 5 und insbesondere von dessen Grundkörper 30 beaufschlagt werden, wodurch sich in unbelastetem Zustand ein Spalt zwischen den freien Enden der Abstandhalter 25, 25' und dem Grundkörper 30 des Funktionsteils 5 ergibt und wodurch die angestrebte Rückstellkraft erst verzögert bei zunehmendem Wasserdruck anspricht. Stattdessen ist es aber auch möglich, dass das Funktionsteil 5 insbesondere mit seinem Grundkörper 30 auf den freien Stirnflächen der Abstandhalter 25, 25' aufliegt, so dass diese Abstandhalter 25, 25' im beaufschlagten Bereich des Grundkörpers 30 eine Materialstreckung oder -verdrängung bei steigendem Wasserdruck bewirken.

Aus der Fig. 18 wird deutlich, dass der äußere Umfangsrandbereich 33 des Funktionsteiles 5 und der benachbarte Umfangsrandbereich 34 des Trägerteiles 6 aneinander lösbar fixierbar sind, so dass der Umfangsrandbereich 33 des Funktionsteiles 5 als rückstellende Zugfeder auf das Funktionsteil 5 einwirken kann. Dazu untergreift der äußere Umfangsrandbereich 33 des Funktionsteiles 5 zumindest einen Hinterschnitt am benachbarten Umfangsrandbereich 34 des Trägerteiles 6. Der zumindest eine Hinterschnitt ist hier an mehreren nasenförmigen Vorsprüngen 35 vorgesehen, die über den zuströmseitigen Stirnumfangsrand des Trägerteiles vorstehen. Ein zuströmseitiges Bauteil, das hier durch ein Vorsatzsieb 18 gebildet wird, ist derart in das Funktionsteil 5 einsetzbar, dass eine Lösebewegung des den Hinterschnitt untergreifenden Umfangsrandbereiches des Funktionsteiles 5 blockiert wird.

Den sanitären Einbauteilen 1, 100, 101 ist das Vorsatzsieb 18 vorgeschaltet, das auf der Zuströmseite des Gehäuseteils 17 mit diesem verbunden ist. Die im durchflussregelnden Funktionselement 3 vorgesehenen und jeweils ein Durchflussloch 4 umgrenzenden Umfangswandungen sind unter dem Druck des zuströmenden Wassers derart gegen eine Rückstellkraft formveränderbar, dass die Durchflusslöcher 4 in Abhängigkeit vom Druck des zuströmenden Wassers einen sich immer wieder ändernden Lochquerschnitt haben. Durch diese Gymnastizierung des zumindest in einem Teilbereich 5 aus elastischem Material hergestellten Funktionselements 3 wird einer Verkalkung und Verschmutzung in diesem Bereich der Einbauteile 1, 100, 101 entgegengewirkt. Da das Funktionsteil 5 in der Minimalstellung des Lochquerschnitts auf dem als Anschlag dienenden Stirnrand 12 des Trägerteils 6 aufliegt, wird die Einschnürbewegung der Durchflusslöcher 4 begrenzt und ein vollständiges Verschließen dieser Durchflusslöcher 4 vermieden.

### Bezugszeichenliste

- Sanitäres Einbauteil: 1
- Einsetzgehäuse: 2
- Funktionselement: 3
- Durchflussloch: 4
- (zuströmseitiges) Funktionsteil (des Funktionselements 3): 5
- Trägerteil: 6
- Ausformung: 7
- Einsetzloch: 8
- Gegenschräge (am Einsetzloch 8): 9
- Einschnürung: 10
- Anschlagsfläche: 11
- (als Anschlag dienender) Stirnrand: 12
- (zuströmseitiges) Gehäuseteil: 13
- (abströmseitiges) Gehäuseteil: 14
- Einsetzteil (der Strahlreguliereinrichtung): 15
- Einsetzteil (der Strahlreguliereinrichtung): 16
- (abströmseitiger) Strömungsgleichrichter: 17
- Vorsatzsieb: 18
- Kanalöffnung: 20
- Dichtnase: 21
- Zwischenraum: 22
- Abstandhalter (am Trägerteil 6): 25, 25'
- Ausformung: 26
- Grundkörper (vom Funktionsteil 5): 30
- Biegezone: 31
- Belüftungsöffnung: 32
- Umfangsrandbereich (am Funktionsteil 5): 33
- Umfangsrandbereich (am Trägerteil 6): 34
- Vorsprünge (als Hinterschnitt am Trägerteil 6): 35
- Sanitäres Einbauteil: 100
- Sanitäres Einbauteil: 101

## Patentansprüche

1. Sanitäres Einbauteil (1, 100, 101) mit einem Einsetzgehäuse (2), das (2) in seinem Gehäuseinnenraum ein durchflussregelndes Funktionselement (3) mit zumindest einem Durchflussloch (4) hat, wobei zumindest ein Durchflussloch (4) von einer Umfangswandung umgrenzt ist, die unter dem Druck des zuströmenden Wassers derart gegen eine Rückstellkraft formveränderbar ist, dass das zumindest eine Durchflussloch (4) einen variablen Lochquerschnitt hat, der in Abhängigkeit vom Druck des zuströmenden Wassers zwischen einer Offenstellung und einer Minimalstellung mit demgegenüber reduziertem Lochquerschnitt veränderbar ist, **dadurch gekennzeichnet, dass** die zumindest eine, ein Durchflussloch (4) umgrenzende Umfangswandung zur Umsetzung einer Druckbeaufschlagung in axialer Richtung in eine radiale Einschnürbewegung entweder an ihrem in Durchströmrichtung orientierten freien Endbereich außenumfangsseitig eine Auflaufschräge hat, die mit einer Gegenschräge (9) an einem Trägerteil (6) zusammenwirkt, oder eine Einschnürung (10) aufweist, mit einer in das Durchflussloch (4) vorstehenden umlaufenden Biegezone (31).

2. Einbauteil nach Anspruch 1, **dadurch gekennzeichnet, dass** das Funktionselement (3) zumindest zweiteilig ausgestaltet ist und wenigstens ein, die mindestens eine, zumindest ein Durchflüssloch (4) umgrenzende Umfangswandung umfassendes Funktionsteil (5) und das, das wenigstens eine Funktionsteil (5) tragendes Trägerteil (6) aufweist.

3. Einbauteil nach Anspruch 2, **dadurch gekennzeichnet, dass** das Trägerteil (6) aus einem gegenüber dem zuströmseitigen Funktionsteil (5) formstabilen Material hergestellt ist und/oder eine zumindest partiell demgegenüber höhere Bauteilsteifigkeit hat.

4. Einbauteil nach einem der Ansprüche 1 bis 3, **dadurch gekennzeichnet, dass** ein auf die Zuströmseite des Funktiönselements (3) wenigstens im Bereich des zumindest einen Durchflussloches (4) in Durchströmrichtung einwirkender Wasserdruck eine Höhenreduktion des Funktionselementes (3) bewirkt, die in eine radiale Einschnürbewegüng der wenigstens einen, zumindest ein Durchflussloch (4) umgrenzenden Umfangswandung umsetzbar ist.

5. Einbauteil nach einem der Ansprüche 1 bis 4, **dadurch gekennzeichnet, dass** ein auf die Zuströmseite des Funktionselementes (3) wenigstens im Bereich des zumindest einen Durchflussloches (4) in Durchströmrichtung einwirkender Wasserdruck eine Formveränderung des Funktionsteiles (5) oder eine Materialverdrängung am Funktionsteil (5) bewirkt, die in eine radiale Einschnürbewegung der wenigstens einen, zumindest ein Durchflussloch (4) umgrenzenden Umfangswandung umsetzbar ist.

6. Einbauteil nach Anspruch 5, **dadurch gekennzeichnet, dass** die durch den Wasserdruck bewirkte Formveränderung oder Materialverdrängung eine zumindest partielle Dickenreduktion, Querschnittsreduktion, Höhenreduktion oder Kompression des Funktionsteiles ist.

7. Einbauteil nach einem der Ansprüche 1 bis 6, **dadurch gekennzeichnet, dass** die zumindest eine, ein Durchflussloch (4) umgrenzende Umfangswandung eine Formgebung hat, die eine Druckbeaufschlagung durch den Wasserdruck in axialer Richtung in eine radiale Einschnürbewegung dieser Umfangswandung umsetzt.

8. Einbauteil nach einem der Ansprüche 2 bis 7, **dadurch gekennzeichnet, dass** die zumindest eine, wenigstens ein Durchflussloch (4) umgrenzende Umfangswandung als düsenförmige Ausformung (7) des Funktionsteils (5) ausgestaltet ist.

9. Einbauteil nach Anspruch 8, **dadurch gekennzeichnet, dass** die wenigstens eine düsenförmige Ausformung (7) des Funktionsteils (5) in ein Einsetzloch (8) im Trägerteil (6) eintaucht.

10. Einbauteil nach Anspruch 9, **dadurch gekennzeichnet, dass** das wenigstens eine Einsetzloch (8) sich in Durchströmrichtung derart vorzugsweise konisch verjüngt, dass eine axiale Vorschubbewegung der düsenförmigen Ausformung (7) in eine radiale Einschnürbewegung im Bereich der Ausformung (7) umsetzbar ist.

11. Einbauteil nach einem der Ansprüche 8 bis 10, **dadurch gekennzeichnet, dass** die wenigstens eine düsenförmige Ausformung (7) eine in axialer Richtung derart nachgiebige Formgebung hat, dass eine axiale Stauchung der düsenförmigen Ausformung (7) in eine radiale Einschnürbewegung im Bereich der Ausformung (7) umsetzbar ist.

12. Einbauteil nach einem der Ansprüche 10 oder 11, **dadurch gekennzeichnet, dass** die in eine radiale Einschnürbewegung der zumindest einen, wenigstens ein Durchflussloch (4) umgrenzenden Umfangswandung umsetzbare Relativbewegung zwischen dem Funktionsteil (5) und dem Trägerteil (6) des Funktionselements (3) durch zumindest einen Anschlag, insbesondere eine Anschlagsfläche (11), begrenzt ist.

13. Einbauteil nach einem der Ansprüche 9 bis 12, **dadurch gekennzeichnet, dass** der zuströmseitige Stirnrand (12) des eine Ausformung (7) aufnehmenden Einsetzloches (8) im Trägerteil (6) die druckbedingte axiale Relativbewegung des Funktionsteils (5) begrenzt.

14. Einbauteil nach einem der Ansprüche 2 bis 13, **dadurch gekennzeichnet, dass** das Funktionsteil (5) einen Scheiben- oder plattenförmigen Grundkörper (30) hat.

15. Einbauteil nach einem der Ansprüche 9 bis 14, **dadurch gekennzeichnet, dass** das Funktionsteil (5) abströmseitig eine Mehrzahl von Ausformungen (7) aufweist.

16. Einbauteil nach Anspruch 15, **dadurch gekennzeichnet, dass** die Abströmseite des Funktionsteiles (5) und die benachbarte Flachseite des Trägerteils (6) in ihrer Form aufeinander abgestimmt sind.

17. Einbauteil nach einem der Ansprüche 1 bis 16, **dadurch gekennzeichnet, dass** zumindest ein Federelement als Rückstellkraft dient, und dass die Rückstellkraft des zumindest einen Federelements auf wenigstens zwei, in Durchflussrichtung voneinander beabstandete Teilbereiche der formnachgiebigen Umfangswandung übertragbar ist.

18. Einbauteil nach einem der Ansprüche 1 bis 17, **dadurch gekennzeichnet, dass** die rückstellende Bauteilsteifigkeit der Umfangswandung des zumindest einen Durchflussloches (4) und/oder die Eigenelastizität des für die zumindest eine Umfangswandung verwendeten Materials als Rückstellkraft vorgesehen ist.

19. Einbauteil nach einem der Ansprüche 1 bis 18, **dadurch gekennzeichnet, dass** das sanitären Einbauteil (1, 100, 101) als Strahlregler ausgestaltet ist, der am Wasserauslauf einer sanitären Auslaufarmatur einen unvereinzelten Gesamtstrahl zu formen hat.

20. Einbauteil nach Anspruch 19, **dadurch gekennzeichnet, dass** das Funktionselement (3) des als Strahlregler ausgestalteten Einbauteiles (1, 100, 101) als durchflussmengenregelnder Strahlzerleger ausgebildet ist.

21. Einbauteil nach Anspruch 20, **dadurch gekennzeichnet, dass** das sanitäre Einbauteil (1, 100, 101) als belüfteter Strahlregler ausgebildet ist und dass auf der Abströmseite des Strahlzerlegers am Gehäuseumfang des Einsetzgehäuses (2) zumindest eine Belüftungsöffnung (32) vorgesehen ist, welche den Gehäuseinnenraum des Einsetzgehäuses (2) mit der Umgebungsluft verbindet.

22. Einbauteil nach einem der Ansprüche 1 bis 21, **dadurch gekennzeichnet, dass** in ein abströmseitiges Gehäuseteil (14) des Einsetzgehäuses (2) zumindest ein Einsetzteil (15, 16) einer Strahlreguliereinrichtung einsetzbar ist.

23. Einbauteil nach Anspruch 22, **dadurch gekennzeichnet, dass** die Auslaufstirnseite des abströmseitigen Gehäuseteils (14) eine als Strömungsgleichrichter (17) ausgestaltete wabenzellenartige Lochstruktur, eine Gitterstruktur oder eine Netzstruktur bildet.

24. Einbauteil nach einem der Ansprüche 2 bis 23, **dadurch gekennzeichnet, dass** ein zwischen dem Funktionsteil (5) und dem Trägerteil (6) vorgesehener Zwischenraum (22) über zumindest einen Entlüftungskanal mit der Umgebungsluft und vorzugsweise mit der Umgebungsluft im Gehäuseinnenraum des Einsetzgehäuses (2) verbunden ist.

25. Einbauteil nach Anspruch 24, **dadurch gekennzeichnet, dass** der zumindest eine Entlüftungskanal das Trägerteil (6) durchsetzt und eine-Kanalöffnung (20) hat, die auf der Abströmseite des Trägerteils (6) vorgesehen ist.

26. Einbauteil nach Anspruch 24 oder 25, **dadurch gekennzeichnet, dass** der zumindest eine Entlüftungskanal das Funktionsteil (5) durchsetzt und eine Kanalöffnung (20) hat, die auf der Zuströmseite des Funktionsteils (5) vorgesehen ist.

27. Einbauteil nach einem der Ansprüche 2 bis 26, **dadurch gekennzeichnet, dass** das Funktionsteil (5) und vorzugsweise dessen scheiben- oder plattenförmiger Grundkörper (30) in einer unbelasteten Ausgangsstellung vom Trägerteil (6) beabstandet ist und unter dem Druck des zuströmenden Wassers sich gegen die rückstellende Bauteilsteifigkeit und/oder die Eigenelastizität zumindest eines Teilbereiches des Funktionsteils (5) dem Trägerteil (6) annähert oder an das Trägerteil (6) anlegt.

28. Einbauteil nach einem der Ansprüche 2 bis 27, **dadurch gekennzeichnet, dass** das Funktionsteil (5) an seinem äußeren Umfangsrandbereich unverrückbar im Einsetzgehäuse (2) gehalten ist.

29. Einbauteil nach einem der Ansprüche 2 bis 28, **dadurch gekennzeichnet, dass** das Funktionsteil (5) mit seinem äußeren Umfangsrandbereich (33) auf dem benachbarten Umfangsrandbereich (34) des Trägerteils (6) aufliegt.

30. Einbauteil nach einem der Ansprüche 1 bis 29, **dadurch gekennzeichnet, dass** zwischen dem Trägerteil (6) und dem Funktionsteil (5) zumindest ein vorzugsweise stiftförmiger Abstandhälter (25, 25') vorgesehen ist, der unter dem Druck des zuströmenden Wassers eine als Rückstellkraft wirksame elastische Verformung des Funktionsteils (5) bewirkt.

31. Einbauteil nach einem der Ansprüche 1 bis 30, **dadurch gekennzeichnet, dass** an das Funktionsteil (5) abströmseitig zumindest ein stiftförmiger Abstandhalter einstückig angeformt ist, der unter dem Druck des zuströmenden Wassers eine als Rückstellkraft wirkende Verformung erfährt.

32. Einbauteil nach Anspruch 31, **dadurch gekennzeichnet, dass** der zumindest eine Abstandhalter (25, 25') auf der Zuströmseite des Trägerteils (6) einstückig angeformt ist.

33. Einbauteil nach Anspruch 31 oder 32, **dadurch gekennzeichnet, dass** zumindest einer der Abstandhalter (25') mit seinem freien Stiftende in eine hutförmige Ausformung (26) des Funktionsteils (5) eingreift, und dass die vorzugsweise dickenreduzierte Umfangswandung der hutförmigen Ausformung (23) durch das unter Druck in Richtung zum Trägerteil (6) bewegte Funktionsteil (5) gummielastisch streckbar ist.

34. Einbauteil nach Anspruch 33, **dadurch gekennzeichnet, dass** der auf dem benachbarten Umfangsrandbereich (34) des Trägerteils (6) aufliegende Umfangsrandbereich (33) des Funktionsteiles (5) als Ringdichtung zwischen dem Einbauteil (1, 100, 101) und einer zuströmseitigen Gegenfläche einer mit dem Einbauteil (1, 100, 101) verbindbaren Auslaufarmatur ausgestaltet ist.

35. Einbauteil nach Anspruch 29 oder 34, **dadurch gekennzeichnet, dass** der äußere Umfangsrandbereich (33) des Funktionsteiles (5) und der benachbarte Umfangsrandbereich (34) des Trägerteiles (6) aneinander lösbar fixierbar sind.

36. Einbauteil nach Anspruch 35, **dadurch gekennzeichnet, dass** der äußere Umfangsrandbereich (33) des Funktionsteiles (5) zumindest einen Hinterschnitt am benachbarten Umfangsrandbereich (33) des Trägerteiles (6) untergreift und dass eine Lösebewegung des den Hinterschnitt untergreifenden Umfangsrandbereiches (33) des Funktionsteils (5) mittels eines zuströmseitigen und zumindest bereichsweise in das Funktionsteil (5) einsetzbaren Bauteiles, insbesondere mittels einem Vorsatzsieb (18), blockierbar ist.

37. Einbauteil nach einem der Ansprüche 9 bis 36, **dadurch gekennzeichnet, dass** das wenigstens eine Einsetzloch (8) in seinem sich konisch verjüngenden Lochabschnitt in Umfangsrichtung voneinander beabstandete und insbesondere leistenförmige Gleitausformungen hat, die der freie Endbereich einer düsenförmigen Ausformung (7) des Funktionsteiles (5) beaufschlagt.

## Claims

1. Sanitary insert part (1, 100, 101), comprising an insert housing (2), which insert housing (2) has in a housing interior thereof a functional element (3) which controls through-flow and has at least one through-flow hole (4), wherein at least one through-flow hole (4) is delimited by a peripheral wall, the shape of which can be changed against a restoring force as a result of the pressure of inflowing water such that the at least one through-flow hole (4) has a variable hole cross-section which can be changed, in dependence upon the pressure of the inflowing water, between an open position and a minimum position having a hole cross-section which is reduced with respect thereto, **characterised in that** in order to convert an application of pressure in the axial direction into a radial constriction movement, the at least one peripheral wall delimiting a through-flow hole (4) either has, on an outer periphery at a free end region thereof as oriented in the through-flow direction, a run-on bevel which cooperates with a mating bevel (9) on a support part (6), or has a constriction (10) with a peripheral bending zone (31) protruding into the through-flow hole (4).

2. Insert part as claimed in claim 1, **characterised in that** the functional element (3) is formed at least in two parts and has at least one functional part (5), which comprises the at least one peripheral wall delimiting at least one through-flow hole (4), and comprises the support part (6) bearing the at least one functional part (5).

3. Insert part as claimed in claim 2, **characterised in that** the support part (6) is produced from a material which is dimensionally stable compared with the functional part (5) on the inflow side and/or has an at least partly higher component part stiffness by comparison.

4. Insert part as claimed in any one of claims 1 to 3, **characterised in that** a water pressure acting upon the inflow side of the functional element (3) at least in the region of the at least one through-flow hole (4) in the through-flow direction causes a height reduction of the functional element (3) which can be converted into a radial constriction movement of the at least one peripheral wall delimiting at least one through-flow hole (4).

5. Insert part as claimed in any one of claims 1 to 4, **characterised in that** a water pressure acting upon the inflow side of the functional element (3) at least in the region of the at least one through-flow hole (4) in the through-flow direction causes a change in shape of the functional part (5) or a material displacement at the functional part (5) which can be converted into a radial constriction movement of the at least one peripheral wall delimiting at least one through-flow hole (4).

6. Insert part as claimed in claim 5, **characterised in that** the change in shape or material displacement caused by the water pressure is an at least partial thickness reduction, cross-section reduction, height reduction or compression of the functional part.

7. Insert part as claimed in any one of claims 1 to 6, **characterised in that** the at least one peripheral wall delimiting a through-flow hole (4) has a shaping which converts an application of pressure, caused by the water pressure, in an axial direction into a radial constriction movement of this peripheral wall.

8. Insert part as claimed in any one of claims 2 to 7, **characterised in that** the at least one peripheral wall delimiting at least one through-flow hole (4) is formed as a nozzle-shaped formation (7) of the functional part (5).

9. Insert part as claimed in claim 8, **characterised in that** the at least one nozzle-shaped formation (7) of the functional part (5) is received into an insert hole (8) in the support part (6).

10. Insert part as claimed in claim 9, **characterised in that** the at least one insert hole (8) tapers preferably conically in the through-flow direction such that an axial feed movement of the nozzle-shaped formation (7) can be converted into a radial constriction movement in the region of the formation (7).

11. Insert part as claimed in any one of claims 8 to 10, **characterised in that** the at least one nozzle-shaped formation (7) has a shaping which is flexible in the axial direction such that an axial compression of the nozzle shaped formation (7) can be converted into a radial constriction movement in the region of the formation (7).

12. Insert part as claimed in any one of claims 10 or 11, **characterised in that** the relative movement, which can be converted into a radial constriction movement of the at least one peripheral wall delimiting at least one through-flow hole (4), between the functional part (5) and the support part (6) of the functional element (3) is delimited by at least one stop, in particular a stop surface (11).

13. Insert part as claimed in any one of claims 9 to 12, **characterised in that** the inflow-side end edge (12) of the insert hole (8), which receives a formation (7), in the support part (6) delimits the pressure-induced axial relative movement of the functional part (5).

14. Insert part as claimed in any one of claims 2 to 13, **characterised in that** the functional part (5) has a disk-shaped or plate-shaped main body (30).

15. Insert part as claimed in any one of claims 9 to 14, **characterised in that** the functional part (5) has a plurality of formations (7) on the outflow side.

16. Insert part as claimed in claim 15, **characterised in that** the outflow side of the functional part (5) and the adjacent flat side of the support part (6) are adapted to one another in terms of their shape.

17. Insert part as claimed in any one of claims 1 to 16, **characterised in that** at least one spring element serves as a restoring force, and the restoring force of the at least one spring element can be transmitted to at least two sub-regions of the shape-flexible peripheral wall, said sub-regions being mutually spaced apart in the through-flow direction.

18. Insert part as claimed in any one of claims 1 to 17, **characterised in that** the restoring component part stiffness of the peripheral wall of the at least one through-flow hole (4) and/or the intrinsic elasticity of the material used for the at least one peripheral wall is/are provided as a restoring force.

19. Insert part as claimed in any one of claims 1 to 18, **characterised in that** the sanitary insert part (1, 100, 101) is configured as a jet regulator for having to form a consolidated complete jet at the water outlet of a sanitary outlet fitting.

20. Insert part as claimed in claim 19, **characterised in that** the functional element (3) of the insert part (1, 100, 101) configured as a jet regulator is formed as a jet splitter which controls a through-flow rate.

21. Insert part as claimed in claim 20, **characterised in that** the sanitary insert part (1, 100, 101) is formed as an aerated jet regulator, and at least one aeration opening (32) is provided on the outflow side of the jet splitter on the housing periphery of the insert housing (2) and connects the housing interior of the insert housing (2) to the ambient air.

22. Insert part as claimed in any one of claims 1 to 21, **characterised in that** at least one insert part (15, 16) of a jet control device can be inserted into an outflow-side housing part (14) of the insert housing (2).

23. Insert part as claimed in claim 22, **characterised in that** the outlet end face of the outflow-side housing part (14) forms a honeycomb-cell-like hole structure, which is configured as a flow rectifier (17), or forms a grid structure or forms a net structure.

24. Insert part as claimed in any one of claims 2 to 23, **characterised in that** an intermediate space (22) provided between the functional part (5) and the support part (6) is connected via at least one ventilation channel to ambient air, and preferably is connected to the ambient air in the housing interior of the insert housing (2).

25. Insert part as claimed in claim 24, **characterised in that** the at least one ventilation channel penetrates the support part (6) and has a channel opening (20) which is provided on the outflow side of the support part (6).

26. Insert part as claimed in claim 24 or 25, **characterised in that** the at least one ventilation channel penetrates the functional part (5) and has a channel opening (20) which is provided on the inflow side of the functional part (5).

27. Insert part as claimed in any one of claims 2 to 26, **characterised in that** the functional part (5) and preferably a disk-shaped or plate-shaped main body (30) thereof, in an unloaded starting position, is spaced apart from the support part (6) and, under the pressure of the inflowing water, approaches the support part (6) or bears against the support part (6) against the restoring component part stiffness and/or the intrinsic elasticity of at least one sub-region of the functional part (5).

28. Insert part as claimed in any one of claims 2 to 27, **characterised in that** the functional part (5) is held non-displaceably at an outer peripheral edge region thereof in the insert housing (2).

29. Insert part as claimed in any one of claims 2 to 28, **characterised in that** the functional part (5) lies with an outer peripheral edge region (33) thereof on the adjacent peripheral edge region (34) of the support part (6).

30. Insert part as claimed in any one of claims 1 to 29, **characterised in that** at least one preferably pin-shaped spacer (25, 25') is provided between the support part (6) and the functional part (5) and, under the pressure of the inflowing water, causes an elastic deformation of the functional part (5), said deformation being effective as a restoring force.

31. Insert part as claimed in any one of claims 1 to 30, **characterised in that** at least one pin-shaped spacer is formed integrally in one piece on the functional part (5) on the outflow side and, under the pressure of the inflowing water, undergoes a deformation effective as a restoring force.

32. Insert part as claimed in claim 31, **characterised in that** the at least one spacer (25, 25') is formed integrally in one piece on the inflow side of the support part (6).

33. Insert part as claimed in claim 31 or 32, **characterised in that** at least one of the spacers (25') engages with its free pin end into a hat-shaped formation (26) of the functional part (5), and the preferably thickness-reduced peripheral wall of the hat-shaped formation (23) can be stretched in a rubber-elastic manner by the functional part (5) which is moved under pressure in the direction of the support part (6).

34. Insert part as claimed in claim 33, **characterised in that** the peripheral edge region (33) of the functional part (5) lying on the adjacent peripheral edge region (34) of the support part (6) is configured as a ring seal between the insert part (1, 100, 101) and an inflow-side mating surface of an outlet fitting which can be connected to the insert part (1, 100, 101).

35. Insert part as claimed in claim 29 or 34, **characterised in that** the outer peripheral edge region (33) of the functional part (5) and the adjacent peripheral edge region (34) of the support part (6) can be detachably fastened to one another.

36. Insert part as claimed in claim 35, **characterised in that** the outer peripheral edge region (33) of the functional part (5) engages under at least one undercut on the adjacent peripheral edge region (33) of the support part (6), and a detaching movement of the peripheral edge region (33), which engages under the undercut, of the functional part (5) can be blocked by means of an inflow-side component part which can be inserted at least in regions into the functional part (5), in particular by means of an attachment screen (18).

37. Insert part as claimed in any one of claims 9 to 36, **characterised in that** the at least one insert hole (8), in the conically tapering hole portion thereof, has in particular strip-shaped slide formations which are spaced apart from one another in the peripheral direction and are acted on by the free end region of a nozzle-shaped formation (7) of the functional part (5).

## Revendications

1. Pièce de montage sanitaire (1, 100, 101) comprenant un boîtier d'insertion (2), lequel boîtier (2) a, en son espace intérieur, un élément fonctionnel (3) de régulation du débit avec au moins un trou d'écoulement (4), selon lequel au moins un trou d'écoulement (4) est cerné par une paroi périphérique dont la forme peut varier par rapport à une force de rappel sous la pression de l'eau qui afflue, de telle sorte qu'au moins un trou d'écoulement (4) a une section de trou variable qui, en fonction de la pression de l'eau qui afflue, varie entre une position ouverte et une position minimale avec une section de trou réduite par rapport à celle-ci, ***caractérisée en ce* qu'**au moins une paroi périphérique cernant un trou d'écoulement (4) et destinée à transformer une application de pression dans la direction axiale en un mouvement de contraction radial présente soit une pente guide sur le côté périphérique extérieur sur sa zone d'extrémité libre orientée dans le sens de l'écoulement, pente guide qui coopère avec une contre-pente (9) sur une pièce support (6), soit une contraction (10) avec une zone de courbure (31) circonférentielle en saillie dans le trou d'écoulement (4).

2. Pièce de montage selon la revendication 1, **caractérisée en ce que** l'élément fonctionnel (3) est réalisé au moins en deux parties et présente au moins une pièce fonctionnelle (5) comprenant au moins une paroi périphérique cernant au moins un trou d'écoulement (4) et la pièce support (6) portant au moins une pièce fonctionnelle (5).

3. Pièce de montage selon la revendication 2, **caractérisée en ce que** la pièce support (6) est fabriquée à partir d'un matériau indéformable par rapport à la pièce fonctionnelle (5) côté afflux et/ou présente une rigidité des éléments au moins partiellement plus élevée par rapport à celle-ci.

4. Pièce de montage selon l'une des revendications 1 à 3, **caractérisée en ce qu'**une pression d'eau agissant sur le côté afflux de l'élément fonctionnel (3) à tout le moins au niveau d'au moins un trou d'écoulement (4) dans la direction d'écoulement provoque une réduction en hauteur de l'élément fonctionnel (3) qui peut se transformer en un mouvement de contraction radiale d'au moins une paroi périphérique cernant au moins un trou d'écoulement (4).

5. Pièce de montage selon l'une des revendications 1 à 4, **caractérisée en ce qu'**une pression d'eau agissant sur le côté afflux de l'élément fonctionnel (3) à tout le moins au niveau d'au moins un trou d'écoulement (4) dans la direction d'écoulement provoque une modification de forme de la pièce fonctionnelle (5) ou une compression de matériau sur la pièce fonctionnelle (5) qui peut se transformer en un mouvement de contraction radiale d'au moins une paroi périphérique cernant au moins un trou d'écoulement (4)

6. Pièce de montage selon la revendication 5, **caractérisée en ce que** la modification de forme ou la compression de matériau provoquée par la pression de l'eau est une réduction d'épaisseur, une réduction de section, une réduction de hauteur ou une compression au moins partielle de la pièce fonctionnelle.

7. Pièce de montage selon l'une des revendications 1 à 6, **caractérisée en ce qu'**au moins une paroi périphérique cernant un trou d'écoulement (4) a une mise en forme qui transforme une application de pression dans la direction axiale par la pression de l'eau en un mouvement de contraction radiale de cette paroi périphérique.

8. Pièce de montage selon l'une des revendications 2 à 7, **caractérisée en ce qu'**au moins une paroi périphérique cernant au moins un trou d'écoulement (4) est réalisée sous la forme d'un façonnage (7) en forme de buse de la pièce fonctionnelle (5).

9. Pièce de montage selon la revendication 8, **caractérisée en ce qu'**au moins un façonnage (7) en forme de buse de la pièce fonctionnelle (5) plonge dans un trou d'insertion (8) dans la pièce support (6).

10. Pièce de montage selon la revendication 9, **caractérisée en ce qu'**au moins un trou d'insertion (8) se rétrécit de préférence en forme de cône dans la direction d'écoulement, de telle sorte qu'un mouvement d'avancement axial du façonnage (7) en forme de buse peut se transformer en un mouvement de contraction radiale au niveau du façonnage (7).

11. Pièce de montage selon l'une des revendications 8 à 10, **caractérisée en ce qu'**au moins un façonnage (7) en forme de buse a une mise en forme souple dans la direction axiale, de telle sorte qu'une compression axiale du façonnage (7) en forme de buse peut se transformer en un mouvement de contraction radiale au niveau du façonnage (7).

12. Pièce de montage selon l'une des revendications 10 ou 11, **caractérisée en ce que** le mouvement relatif pouvant se transformer en un mouvement de contraction radiale d'au moins une paroi périphérique cernant au moins un trou d'écoulement (4) entre la pièce fonctionnelle (5) et la pièce support (6) de l'élément fonctionnel (3) est limité par au moins une butée, en particulier une surface de butée (11).

13. Pièce de montage selon l'une des revendications 9 à 12, **caractérisée en ce que** le bord frontal (12) côté afflux du trou d'insertion (8) recevant un façonnage (7), limite, dans la pièce support (6), le mouvement relatif axial de la pièce fonctionnelle (5) causé par la pression.

14. Pièce de montage selon l'une des revendications 2 à 13, **caractérisée en ce que** la pièce fonctionnelle (5) a un corps de base (30) en forme de disque ou de plaque.

15. Pièce de montage selon l'une des revendications 9 à 14, **caractérisée en ce que** la pièce fonctionnelle (5) présente, côté écoulement, une pluralité de façonnages (7).

16. Pièce de montage selon la revendication 15, **caractérisée en ce que** le côté écoulement de la pièce fonctionnelle (5) et le côté plat adjacent de la pièce support (6) sont adaptés l'un à l'autre dans leur forme.

17. Pièce de montage selon l'une des revendications 1 à 16, **caractérisée en ce qu'**au moins un élément ressort sert de force de rappel et **en ce que** la force de rappel d'au moins un élément ressort peut être transmise sur au moins deux zones partielles de la paroi périphérique souple en termes de forme, qui sont distantes l'une de l'autre dans la direction d'écoulement.

18. Pièce de montage selon l'une des revendications 1 à 17, **caractérisée en ce que** la rigidité de l'élément de rappel de la paroi périphérique d'au moins un trou d'écoulement (4) et/ou l'élasticité propre du matériau utilisé pour au moins une paroi périphérique est/sont prévue(s) sous la forme d'une force de rappel.

19. Pièce de montage selon l'une des revendications 1 à 18, **caractérisée en ce que** la pièce de montage sanitaire (1, 100, 101) est réalisée sous la forme d'un brise-jet aérateur qui doit former un jet complet non isolé au niveau de la vidange d'eau d'un robinet de vidange sanitaire.

20. Pièce de montage selon la revendication 19, **caractérisée en ce que** l'élément fonctionnel (3) de la pièce de montage (1, 100, 101) réalisée sous la forme d'un brise-jet aérateur est conçu sous la forme d'un décomposeur de jet régulant le débit.

21. Pièce de montage selon la revendication 20, **caractérisée en ce que** la pièce de montage sanitaire (1, 100, 101) est conçue sous la forme d'un brise-jet aérateur ventilé et **en ce que**, sur le côté écoulement du décomposeur de jet au niveau de la périphérie du boîtier d'insertion (2), au moins une ouverture d'aération (32) est prévue, cette dernière reliant l'espace intérieur du boîtier d'insertion (2) à l'air ambiant.

22. Pièce de montage selon l'une des revendications 1 à 21, **caractérisée en ce que**, dans une partie (14) du boîtier d'insertion (2) côté écoulement, au moins une pièce d'insertion (15, 16) d'un dispositif de régulation de jet peut être insérée.

23. Pièce de montage selon la revendication 22, **caractérisée en ce que** le côté frontal de vidange de la partie (14) du boîtier côté écoulement forme une structure de trou, une structure de grille ou une structure de réseau réalisée sous la forme d'un stabilisateur d'écoulement (17).

24. Pièce de montage selon l'une des revendications 2 à 23, **caractérisée en ce qu'**un espace intermédiaire (22) prévu entre la pièce fonctionnelle (5) et la pièce support (6) est relié à l'air ambiant et, de préférence, à l'air ambiant dans l'espace intérieur du boîtier d'insertion (2) par l'intermédiaire d'au moins un canal de purge.

25. Pièce de montage selon la revendication 24, **caractérisée en ce qu'**au moins un canal de purge pénètre dans la pièce support (6) et présente une ouverture de canal (20) qui est prévue sur le côté écoulement de la pièce support (6).

26. Pièce de montage selon la revendication 24 ou 25, **caractérisée en ce qu'**au moins un canal de purge pénètre dans la pièce fonctionnelle (5) et présente une ouverture de canal (20) qui est prévue sur le côté afflux de la pièce fonctionnelle (5).

27. Pièce de montage selon l'une des revendications 2 à 26, **caractérisée en ce que** la pièce fonctionnelle (5) et de préférence son corps de base (30) en forme de disque ou de plaque est distant(e) de la pièce support (6) dans une position de sortie non chargée et, sous la pression de l'eau qui afflue, se rapproche de la pièce support (6) ou se place sur la pièce support (6) contre la rigidité de rappel de la pièce et/ou l'élasticité propre d'au moins une zone partielle de la pièce fonctionnelle (5).

28. Pièce de montage selon l'une des revendications 2 à 27, **caractérisée en ce que** la pièce fonctionnelle (5) est maintenue immobile dans le boîtier d'insertion (2) sur sa zone de bord périphérique extérieure.

29. Pièce de montage selon l'une des revendications 2 à 28, **caractérisée en ce que** la pièce fonctionnelle (5) repose avec sa zone de bord périphérique extérieure (33) sur la zone de bord périphérique adjacente (34) de la pièce support (6).

30. Pièce de montage selon l'une des revendications 1 à 29, **caractérisée en ce qu'**entre la pièce support (6) et la pièce fonctionnelle (5), au moins une douille d'écartement (25, 25') de préférence en forme de cheville est prévue, et provoque, sous la pression de l'eau qui afflue, une déformation élastique de la pièce fonctionnelle (5) agissant comme une force de rappel.

31. Pièce de montage selon l'une des revendications 1 à 30, **caractérisée en ce que**, sur la pièce fonctionnelle (5) coté écoulement, au moins une douille d'écartement en forme de cheville est formée d'une seule pièce et subit, sous la pression de l'eau qui afflue, une déformation agissant comme une force de rappel.

32. Pièce de montage selon la revendication 31, **caractérisée en ce qu'**au moins une douille d'écartement (25, 25') est formée d'une seule pièce sur le côté afflux de la pièce support (6).

33. Pièce de montage selon la revendication 31 ou 32, **caractérisée en ce qu'**au moins l'une des douilles d'écartement (25') vient en contact avec son extrémité de cheville libre dans un façonnage (26) de la pièce fonctionnelle (5) en forme de chapeau et **en ce que** la paroi périphérique du façonnage (23) en forme de chapeau, de préférence d'épaisseur réduite, est extensible de manière élastique par la pièce fonctionnelle (5) déplacée sous pression en direction de la pièce support (6).

34. Pièce de montage selon la revendication 33, **caractérisée en ce que** la zone de bord périphérique (33) de la pièce fonctionnelle (5) reposant sur la zone de bord périphérique adjacente (34) de la pièce support (6) est réalisée sous la forme d'un joint annulaire entre la pièce de montage (1, 100, 101) et une contre-surface côté afflux d'un robinet de vidange qui peut être relié à la pièce de montage (1, 100, 101).

35. Pièce de montage selon la revendication 29 ou 34, **caractérisée en ce que** la zone de bord périphérique extérieure (33) de la pièce fonctionnelle (5) et la zone de bord périphérique adjacente (34) de la pièce support (6) peuvent être fixées l'une sur l'autre de manière détachable.

36. Pièce de montage selon la revendication 35, **caractérisée en ce que** la zone de bord périphérique extérieure (33) de la pièce fonctionnelle (5) vient en contact en dessous d'au moins une contre-dépouille au niveau de la zone de bord périphérique adjacente (33) de la pièce support (6) et **en ce qu'**un mouvement de détachement de la zone de bord périphérique (33) de la pièce fonctionnelle (5) qui vient en contact en dessous de la contre-dépouille peut être bloqué au moyen d'un élément côté afflux et insérable au moins partiellement dans la pièce fonctionnelle (5), en particulier au moyen d'un tamis (18) en amont.

37. Pièce de montage selon l'une des revendications 9 à 36, **caractérisée en ce qu'**au moins un trou d'insertion (8) a, dans sa partie de trou qui se rétrécit en forme de cône, des façonnages de glissement distants les uns des autres dans la direction périphérique et, en particulier, en forme de barres que sollicite la zone d'extrémité libre d'un façonnage (7) de la pièce fonctionnelle (5) en forme de buse.
